# FASCICULE DE BREVET EUROPEEN

(11) **EP 2 095 703 B1**
(45) Date de publication et mention de la délivrance du brevet: **08.04.2015**
(21) Numéro de dépôt: 09290145.3
(22) Date de dépôt: 27.02.2009
(51) Int. Cl.: A01B 73/04, A01D 89/00, A01D 41/14

(54) **Système d'entraînement mécanique d'au moins un outil d'un engin agricole comportant deux tronçons superposables et le procédé de préparation au travail ou à la route d'un tel engin**
Mechanisches Antriebssystem mindestens eines Werkzeugs einer landwirtschaftlichen Maschine, das über zwei übereinander positionierbare Spurstangen verfügt, und Verfahren zur Arbeits- oder Fahrvorbereitung einer solchen Maschine
System for mechanically driving at least one tool of a farm machine comprising two stackable sections and method for preparing such a machine for work or for the road

(30) Priorité: 29.02.2008 FR 0801131
(43) Date de publication de la demande: 02.09.2009
(73) Titulaire: IDASS, 45140 Ormes (FR)
(72) Inventeur: Bizeul, Jean-Marc, 45430 Chécy (FR)
(74) Mandataire: Debay, Yves

(56) Documents cités:
- EP-A- 1 378 158
- CA-A1- 2 530 169
- FR-A- 2 781 118
- FR-A- 2 868 905
- GB-A- 1 275 492

## Description

Il est connu dans le domaine des ramasseurs (pick-up) et des coupeuses ou moissonneuses, de créer des outils de largeur maximale pouvant aller jusqu'à six mètres voire plus. Les ramasseurs de grande largeur sont montés sur une machine agricole de type ensileuse ou moissonneuse-batteuse et comprennent un rotor à dents pour ramasser les produits et deux vis de transfert à pas ou rotation inversés pour regrouper transversalement les produits vers le milieu du ramasseur, vers l'entrée de l'ensileuse ou de la moissonneuse-batteuse, au travers d'un cadre intermédiaire du ramasseur oscillant par rapport à un autre cadre d'attelage solidarisable aux moyens d'attelage de la machine.

De tels outils présentent l'inconvénient de pouvoir circuler difficilement sur les routes et des outils de ramassage ou de moissonneuse constitués de deux tronçons séparables pour être repliés l'un sur l'autre en position de transport, ont été développés dans l'art antérieur pour résoudre ce problème.

De tels dispositifs sont connus notamment par le brevet européen EP 0 442 067, lequel enseigne de replier les tronçons en faisant pivoter un premier tronçon (gauche vu de la cabine) par rapport à une partie fixe de la machine agricole et en déplaçant en translation le deuxième tronçon par rapport à la partie fixe pour amener le deuxième tronçon en dessous du premier tronçon. Dans ce système de repliage le premier tronçon pivote dans le sens antihoraire pour un observateur face à la machine. Or le boitier d'entrainement des outils montés dans chaque tronçon est à gauche de la machine du coté du tronçon pivotant, cette disposition nécessite le débranchement de l'entrainement avant la rotation du tronçon gauche.

Une autre solution technologique à ce problème du repliage consistait, comme enseigné par le brevet EP 0 373 406, à articuler les deux tronçons l'un sur l'autre et à rendre un des deux tronçons solidaire en translation de la partie fixe de l'objet. Dans ce cas, le tronçon de droite vu de la machine ou à gauche de la machine en regardant la machine de face, va pivoter dans le sens horaire et le tronçon à droite (vu de face) va se déplacer de la droite de la figure vers la gauche pour venir se centrer par rapport à la machine. Ceci de façon à ce que les deux tronçons superposés soient disposés en position de route, de façon pratiquement symétrique par rapport à l'axe de la machine. Le flanc droit (vu de face) du tronçon droit va donc se trouver, après translation, trop près du boitier d'entrainement et l'utilisateur doit, avant la translation, désaccoupler l'entrainement de la sortie du boitier d'entrainement.

Ces solutions qui permettent de réduire l'encombrement pour circuler sur les routes présentent l'inconvénient d'obliger l'utilisateur de l'outil à descendre de la cabine de pilotage, pour désaccoupler la transmission du mouvement. En effet, une fois l'outil disposé en position de travail, c'est à dire les deux tronçons alignés, il faut venir effectuer le branchement de la prise de force en sortie d'un boîtier d'entraînement permettant de communiquer aux outils, disposés sur les deux tronçons, le mouvement nécessaire à leur entrée en fonction. Une fois l'accouplement mécanique réalisé, le conducteur remontait dans sa machine et embrayait la transmission de mouvement entre le moteur de la machine et le boîtier d'entraînement disponible à l'avant de la machine, par exemple, l'ensileuse ou la moissonneuse-batteuse. Ce boîtier d'entraînement présentant par exemple un axe cannelé permettant de recevoir un tube comportant les formes complémentaires pour être entraîné par l'axe.

Ces opérations de branchement et débranchement de la transmission du mouvement aux outils doivent être effectuées après le dépliement des outils ou à la fin du travail, avant leur repliement, ceci pour éviter des accidents et la destruction de la transmission.

Il est également connu par le brevet FR2781118 un équipement à deux tronçons repliables dont le mouvement de rotation des outils est commandé par des moteurs hydrauliques. Toutefois dans ce type de réalisation les flexibles d'alimentation des moteurs hydrauliques subissent de nombreuses contraintes lors des pliages et des rotations et un tel dispositif n'a jamais été industrialisé pour des raisons de fiabilité et de manque de puissance.

Un but de l'invention est de proposer un système d'entraînement mécanique d'outils pour machines agricoles à outils repliables l'un sur l'autre ne présentant pas les inconvénients de l'art antérieur.

Ce but est atteint par le fait que le système d'entraînement d'outils pour machines agricoles comportant un premier demi-bâti supportant des outils, se translatant entre une position de travail en alignement avec un deuxième demi-bâti pourvu d'outils pivotant entre la position de travail et une position de transport où le deuxième demi-bâti est superposé sur le premier demi-bâti, les outils montés dans chaque bâti étant entraînés par au moins un moyen disposé à l'extrémité externe d'au moins un des demi-bâtis lorsque ceux-ci sont en position de travail, le premier demi-bâti étant monté en translation sur un dispositif à cadre oscillant, comportant un cadre d'attelage solidarisé à l'engin agricole et un cadre intermédiaire permettant des débattements angulaires par rapport au cadre solidaire de l'engin selon un axe de rotation longitudinal et parallèle à l'axe de symétrie de la machine, le système d'entraînement est caractérisé en ce qu'il comporte :
- un dispositif de transmission de l'entraînement provenant du boîtier d'entraînement de la machine agricole, vers un axe d'entrainement du moyen d'entrainement des outils disposé à l'extrémité du demi-bâti pivotant, lors de la mise en place du demi-bâti pivotant de sa position de repliement vers sa position de travail dépliée, le dispositif de transmission comprenant au moins un arbre de transmission monté sur la partie supérieure ou inférieure du cadre intermédiaire,
- un axe de transmission de l'entrainement entre un moyen d'entrainement disposé à l'extrémité externe du demi-bâti qui pivote et le moyen d'entrainement disposé à l'extrémité externe du demi-bâti qui translate, lors de la mise en place du demi-bâti pivotant de sa position de repliement vers sa position de travail dépliée, cet axe de transmission étant soit positionné dans la partie supérieure ou inférieure de chaque demi-bâti, soit positionné dans la partie supérieure ou inférieure du cadre intermédiaire où au moins une portion de l'axe de transmission est confondue avec l'axe d'entrainement du moyen d'entrainement des outils disposé à l'extrémité du demi-bâti pivotant et l'arbre de transmission monté sur la partie supérieure ou inférieure du cadre intermédiaire.

Selon une autre particularité, le système d'entrainement d'outils est caractérisé en ce que les outils comprennent un outil supérieur formé par une vis d'Archimède et un outil inférieur formé par un rotor de ramassage de sens de rotation inversé par rapport au sens de rotation d'une des vis, la vis d'un demi-bâti ayant un pas de vis inversé par rapport à la vis du demi-bâti adjacent ou un sens de rotation inversé.

Selon une autre particularité, le système d'entrainement d'outils est caractérisé en ce que les outils montés dans chaque bâti sont entraînés par au moins un moyen disposé à l'extrémité externe de chacun des demi-bâtis.

Selon une autre particularité, le système d'entrainement d'outils est caractérisé en ce que les outils montés dans chaque bâti sont entraînés par au moins un moyen disposé à l'extrémité externe du demi-bâti qui pivote, les outils du demi-bâti qui pivote engrenant par crabot avec les outils du demi-bâti qui translate.

Selon une autre particularité, le système d'entrainement d'outils est caractérisé en ce que le demi-bâti qui pivote est monté articulé sur le cadre intermédiaire.

Selon une autre particularité, le demi-bâti qui pivote est monté articulé sur le demi-bâti qui se translate, ce dernier étant monté en translation sur le cadre intermédiaire.

Selon une autre particularité, le système d'entrainement d'outils est caractérisé en ce que le demi-bâti qui pivote s'articule avec le cadre intermédiaire par l'intermédiaire d'une biellette ou d'un axe de sorte qu'au moins un déplacement particulier, par translation ou bascule, d'un des demi-bâtis entraine concomitamment le déplacement, par bascule ou par translation, du second demi-bâti.

Selon une autre particularité, le système d'entrainement d'outils est caractérisé en ce que le demi-bâti qui pivote est monté articulé sur le cadre intermédiaire indépendamment du demi-bâti qui se translate, le demi-bâti qui se translate étant monté en translation sur le cadre intermédiaire.

Selon une autre particularité, le système d'entrainement d'outils est caractérisé en ce que le demi-bâti qui pivote s'articule avec le demi-bâti qui translate par l'intermédiaire d'une biellette ou d'un axe de sorte qu'au moins un déplacement particulier, par translation ou bascule, d'un des demi-bâtis entraine concomitamment le déplacement, par bascule ou par translation, du second demi-bâti.

Selon une autre particularité, le système d'entraînement d'outils pour machines agricoles selon une des revendications précédentes, caractérisé en ce que le système comprend au moins un déclencheur actionnant le fonctionnement d'au moins un premier vérin qui assure le déplacement d'au moins un demi-bâti lors d'une translation vers l'intérieur et/ou l'extérieur du demi-bâti qui translate et/ou du pivotement du demi-bâti qui pivote, et en ce qu'au moins un dispositif de fin de course est monté sur un des demi-bâtis mobile du système de sorte que l'arrivée d'un demi-bâti déplacé par le premier vérin en fin de parcours actionne un mécanisme qui stoppe le fonctionnement du premier vérin qui contrôle le déplacement du demi-bâti et/ou déclenche le déplacement d'un des demi-bâtis par un second vérin.

Selon une autre particularité, le système d'entrainement d'outils est caractérisé en ce que les demi-bâtis ont une section en forme de U et supportent, entre les jambes du U, les deux outils montés pivotant dans les jambes du U.

Selon une autre particularité, le système d'entrainement d'outils est caractérisé en ce que des moyens d'établir automatiquement une liaison d'entraînement sont constitués d'un dispositif à crabot dont un élément est monté solidaire de l'arbre de transmission positionné dans la partie supérieure ou inférieure du cadre intermédiaire et l'autre élément complémentaire est monté en rotation dans un carter supportant les moyens d'entraînement des outils, cette partie de crabot montée sur un axe d'entrainement étant sollicitée en permanence par un ressort dans sa position la plus en saillie dans laquelle elle engrène avec le demi-crabot solidaire du bâti et dans une position rétractée, dans laquelle le ressort est comprimé lorsque, par exemple, les dents de chacun des demi-crabots ne se sont pas emboîtées.

Selon une autre particularité, le système d'entrainement d'outils est caractérisé en ce que les moyens d'établir automatiquement une liaison d'entraînement constitués d'un dispositif à crabot comprennent un dispositif permettant la translation de la partie du crabot sollicité par le ressort sur son moyeu et selon un axe parallèle à l'axe d'entrainement, le dispositif permettant un écartement et/ou un engrènement des demi-crabots lors du déploiement ou du repliement du système.

Selon une autre particularité, le système d'entrainement d'outils est caractérisé en ce que le dispositif de transmission de l'entraînement provenant du boîtier d'entraînement de la machine agricole vers un axe d'entraînement comprend un alignement de l'arbre de transmission situé dans la partie supérieure ou inférieure du cadre intermédiaire, qui forme le moyen d'entrainement des outils disposés à l'extrémité du demi-bâti pivotant, avec l'axe d'au moins une transmission de type à cardan qui transmet, en permettant une légère oscillation, une énergie de rotation fournie par la sortie du boitier d'entrainement de la machine agricole.

Selon une autre particularité, le système d'entrainement d'outils est caractérisé en ce que le dispositif de transmission de l'entrainement comprend un mécanisme de renvoi d'angle entre une première transmission de type cardan ou crabot orientée depuis la sortie du boitier d'entrainement vers la face de la machine agricole qui supporte les outils et une seconde transmission de type cardan alignée sur l'arbre de transmission situé dans la partie supérieure ou inférieure du cadre intermédiaire.

Selon une autre particularité, le système d'entrainement d'outils est caractérisé en ce que l'arbre de transmission situé dans la partie supérieure ou inférieure du cadre intermédiaire est relié par un renvoi au boîtier d'entraînement de la machine agricole, le renvoi comportant au moins une transmission de type à cardan permettant une légère oscillation avec un pignon relié par une chaîne à l'arbre de transmission du cadre intermédiaire.

Selon une autre particularité, le système d'entrainement d'outils est caractérisé en ce que le dispositif de transmission de l'entrainement comprend un mécanisme de renvoi d'angle entre une première transmission de type cardan ou crabot orientée vers la face de la machine agricole qui supporte les outils et une seconde transmission de type cardan qui permet une légère oscillation avec un pignon relié par une chaîne à l'arbre de transmission du cadre intermédiaire.

Selon une autre particularité, le système d'entrainement d'outils est caractérisé en ce que la position du pignon lié par un cardan au boîtier d'alimentation ou au boitier de renvoi d'angle est définie en fonction du type de la machine sur lequel l'équipement vient s'adapter.

Selon une autre particularité, le système d'entrainement d'outils est caractérisé en ce que le pignon peut être situé approximativement à mi-hauteur du cadre.

Selon une autre particularité, le système d'entrainement d'outils est caractérisé en ce que le pignon peut être situé à proximité du bord inférieur du cadre.

Selon une autre particularité, le système d'entrainement d'outils est caractérisé en ce que l'extrémité d'au moins un des demi-bâtis intègre un flasque disposé verticalement et sur laquelle se trouve monté en rotation l'extrémité de l'axe d'une vis d'Archimède, le flasque étant monté mobile par rapport au demi-bâti dans un plan sensiblement perpendiculaire à l'axe de la vis d'Archimède pour permettre le déplacement d'au moins une portion de la vis d'Archimède par rapport au fond d'auge disposé sur le pourtour d'au moins une partie de la vis d'Archimède.

Selon une autre particularité, le système d'entrainement d'outils est caractérisé en ce que des moyens de verrouillage permettent de maintenir les deux demi-bâtis fixés l'un par rapport à l'autre pour éviter un débattement relatif entre les demi-bâtis en dehors des utilisations de la machine lorsque les demi-bâtis sont dépliés.

Un autre but est de proposer un procédé de préparation à la route d'un engin agricole à deux demi-bâtis articulés l'un sur l'autre, un des demi-bâti étant monté en translation sur le cadre intermédiaire.

Ce but est atteint par le fait que le procédé automatisé de préparation à la route d'un engin agricole à deux demi-bâtis superposables l'un sur l'autre en position de route et alignables l'un adjacent à l'autre en position de travail intégrant un système d'entrainement d'outils selon une des revendications précédentes, caractérisé en ce qu'il comporte une étape de rotation du demi-bâti pivotant pour désolidariser un mécanisme à crabot du mécanisme complémentaire monté soit sur un cadre intermédiaire soit sur les demi-bâtis, et une étape de translation du demi-bâti qui est monté en translation par rapport au cadre intermédiaire, la transmission reliée sur le cadre intermédiaire au moyen d'entraînement des outils se rétractant pour que les moyens d'entraînement externes respectifs du demi-bâti translaté et du demi-bâti pivoté se retrouvent superposés l'un au dessus de l'autre.

Selon une autre particularité, le procédé d'entrainement d'outils est caractérisé en ce que le déplacement, par pivotement ou translation, d'un des demi-bâtis se réalise concomitamment au déplacement, par translation ou par pivotement, du second demi-bâti.

Selon une autre particularité, le procédé d'entrainement d'outils est caractérisé en ce que la désolidarisation du crabot se réalise par une première translation du demi-bâti qui translate et/ou d'un des demi-crabots d'une certaine distance pour permettre le désaccouplement des demi-crabots et/ou écarter les deux demi-bâtis, suivie de la rotation du demi-bâti qui pivote puis de la translation vers l'intérieur du demi-bâti qui translate pour le positionner sous le demi-bâti pivoté.

Selon une autre particularité, le procédé d'entrainement d'outils est caractérisé en ce que le procédé comprend au préalable :
- une étape de verrouillage du cadre intermédiaire sur le cadre d'attelage, et/ou
- une étape de déverrouillage des demi-bâtis l'un sur l'autre, et/ou
- une étape de déverrouillage des demi-bâtis sur le cadre intermédiaire.

Un autre procédé de préparation à la route sans intervention manuelle d'un engin agricole à deux demi-bâtis articulés l'un sur l'autre et dont l'un des bâti est monté en translation sur le cadre intermédiaire comporte :
- une première étape de déplacement d'au moins un des demi-bâtis (1 a, 1 b) de l'axe de symétrie de l'engin vers l'extérieur et/ou d'un des demi-crabots d'une certaine distance pour permettre le désaccouplement des crabots (23) ;
- une étape de pivotement des bâtis (1 a, 1 b) l'un sur l'autre ;
- une étape de déplacement des deux bâtis (1a, 1b) dans la même direction de translation opposée à celle de la première étape pour amener les axes de symétrie en concordance avec l'axe de symétrie de l'engin agricole (3).

D'autres particularités et avantages de la présente invention apparaîtront plus clairement à la lecture de la description ci-après faite en référence aux dessins représentatifs d'un mode de réalisation de l'invention, donné à titre illustratif parmi lesquels :
- la figure 1 représente une vue de dessus d'une variante d'un engin agricole selon l'invention ;
- les figures 2a1, 2a2, 2a3 et 2a4 représentent plusieurs variantes du mécanisme d'entraînement de la partie gauche de l'engin agricole en vue de dessus ;
- la figure 2b1 et 2b2 représentent une vue plus détaillée de l'entraînement par crabot, ainsi qu'une vue de la section d'emboitement des dents du crabot lors de l'entrainement ;
- la figure 2c représente une vue du dessus d'une extrémité de l'axe de transmission pour l'entraînement des outils montés sur le demi-bâti qui translate dans une variante ou l'axe de transmission est monté sur le cadre intermédiaire ;
- les figures 2d1 et 2d2 représentent une vue du dessus du mécanisme d'entraînement externe des outils montés sur le demi-bâti qui translate, ainsi qu'une vue de profil de l'entrainement des outils ;
- les figures 3a, 3b, 3c représentent des exemples de boites de renvoi vers le boîtier d'entraînement disposé sur le flan d'une machine agricole permettant une adaptation à tout type de matériel ;
- la figure 4 représente une vue de derrière en position de travail des demi-bâtis déployés selon une variante de l'invention ;
- la figure 5 représente une vue de derrière en position pliée pour le transport route des deux demi-bâtis selon une variante de l'invention ;
- la figure 6 représente les différentes étapes de préparation à la route d'un engin selon un premier mode de réalisation de l'invention ;
- la figure 7 représente les étapes de préparation à la route d'un engin selon un deuxième mode de réalisation de l'invention ;
- les figures 8a et 8b représente une vue latérale, des deux outils d'un ramasseur montés sur le bâti avec les moyens d'entrainement externes enlevé, ainsi qu'une vue latérale d'un déplacement vertical de la vis hélicoïdale ;
- la figure 9 représente en vue de face une vis d'Archimède pour le demi-bâti gauche montée en rotation entre un flanc externe avec moyen d'entrainement et un flanc interne adjacent en position de travail au flan interne d'un autre demi-bâti ;
- la figure 10a représente les deux bâtis en position de travail ;
- la figure 10b représente la position des deux bâtis avant les opérations de préparation à la route ;
- les figures 11 a et 11 b représentent un autre mode de réalisation d'un cadre oscillant comportant un cadre intermédiaire et un cadre d'attelage avec quatre points de montage,

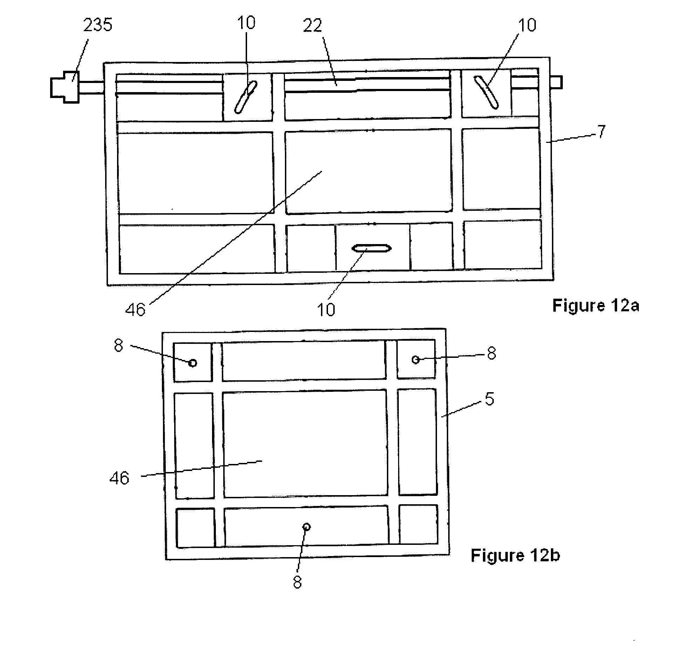

- les figures 12a et 12b représentent un autre mode de réalisation d'un cadre oscillant comportant un cadre intermédiaire et un cadre d'attelage avec trois points de montage.

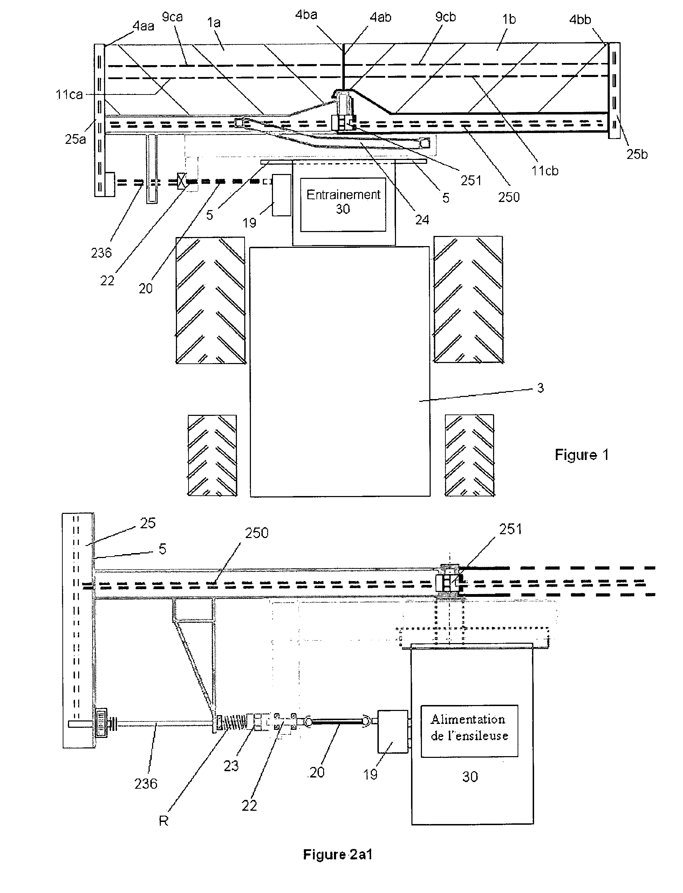

La description de l'invention va maintenant être effectuée en liaison avec ces figures 1 à 10. Sur le schéma de la figure 1, on peut voir une machine agricole (3), moissonneuse-batteuse ou ensileuse, équipée de roues et comportant sur sa partie avant un boîtier d'entraînement (19) monté sur le flanc gauche de l'alimentation pouvant transmettre un mouvement de rotation du moteur à des outils extérieurs frontaux. Ce boîtier d'entraînement (19) présentant en général un axe cannelé et permettant l'emboîtement d'un manchon cannelé, porté par l'extrémité de la transmission (20) destinée à s'emboiter à l'intérieur du tube pour transmettre le mouvement.

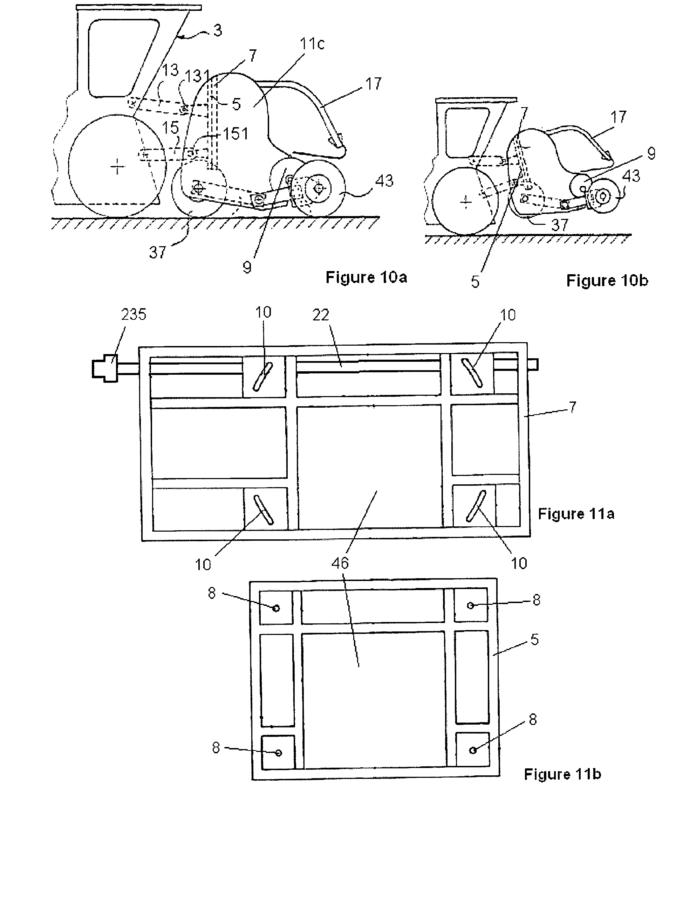

A la partie avant de la machine, comme on peut le voir sur les figures 10a et 10b, est montée une alimentation ainsi que des points de fixation (131, 151) pouvant être des bras (13, 15) élévateurs et/ou un caisson d'alimentation sur lesquels se positionne un cadre (5) solidarisable. Selon des modes de réalisation différents, le montage du cadre (5) solidarisable se réalise par un caisson monobloque encastrable et associé à des moyens de verrouillage. Un cadre intermédiaire (7) permettant des débattements angulaires selon un axe de rotation longitudinal et parallèle à l'axe de symétrie de la machine, par rapport au cadre (5) solidaire de la machine. Le but de ces deux cadres (5, 7) est de permettre un mouvement indépendant des outils montés à l'avant de la machine agricole par rapport aux mouvements de la machine (3), les outils montés à l'avant de la machine étant en contact avec le sol au niveau de roues (37, 43) propres à la machine agricole. Le contact de la machine avec le sol peut également se réaliser par l'intermédiaire de roues bogies et/ou de roues d'acier, et/ou de patins qui permettent à la machine de glisser sur le sol. Ces moyens, qui assurent le contact de la machine avec le sol, se trouvent par exemple monté par paire sur la machine, un moyen sur chacun des demi-bâtis (1a, 1b). Si l'on veut plus de détails sur le fonctionnement et un mode de réalisation, on pourra se référer à la demande de brevet français FR 9803819, déposé par le même inventeur, publiée sous le N° FR 2776467. Le mode de réalisation de la structure à cadre oscillant est donné à titre illustratif et tout mode de réalisation équivalent peut y être substitué. Le cadre oscillant est formé d'un cadre, monté par des moyens d'attelage sur la machine agricole et d'un cadre intermédiaire (7) mobile portant solidairement le ramasseur, le cadre solidaire (5) et le cadre intermédiaire (7) mobile sont reliés par un moyen de liaison (8, 10) permettant une oscillation relative des cadres sollicités par des moyens élastiques de rappel vers une position d'équilibre et constituant le moyen de liaison (8, 10) oscillant du ramasseur sur la machine agricole. Le cadre oscillant peut présenter un nombre de points de liaison variable qui entourent un espace (46) pour l'amenée des andains récoltés vers l'arrière du système.

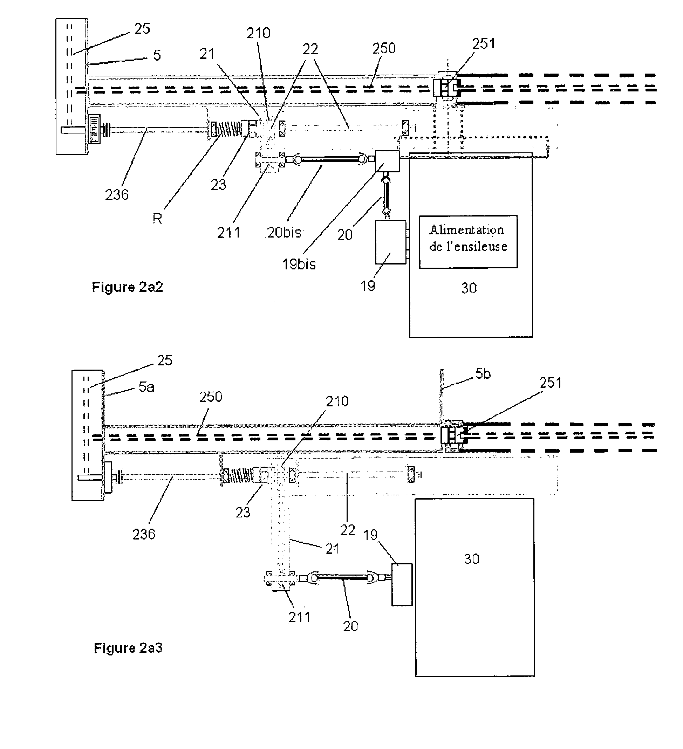

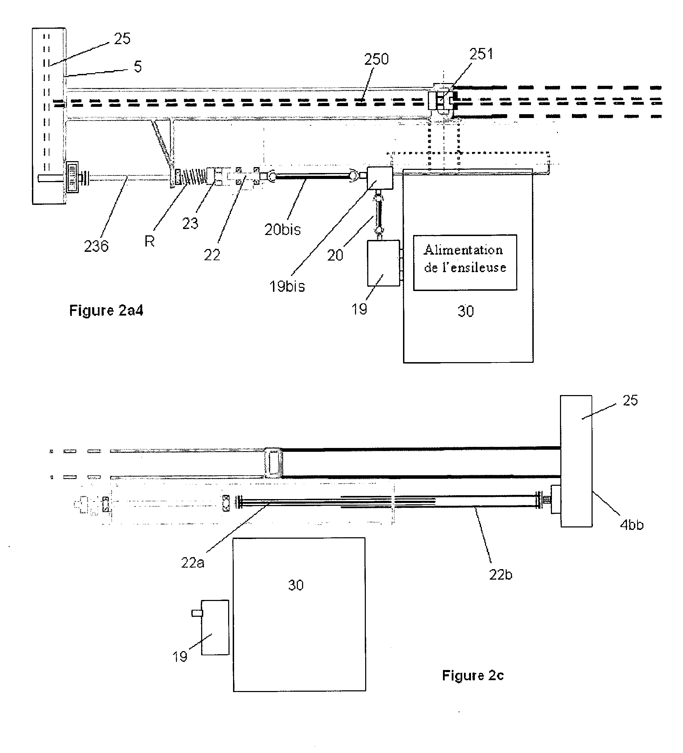

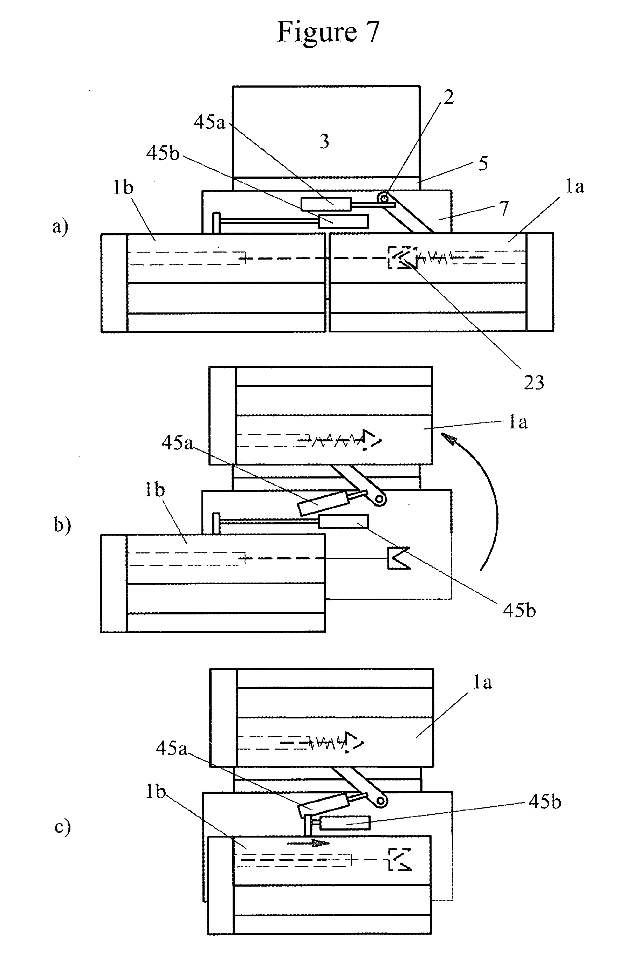

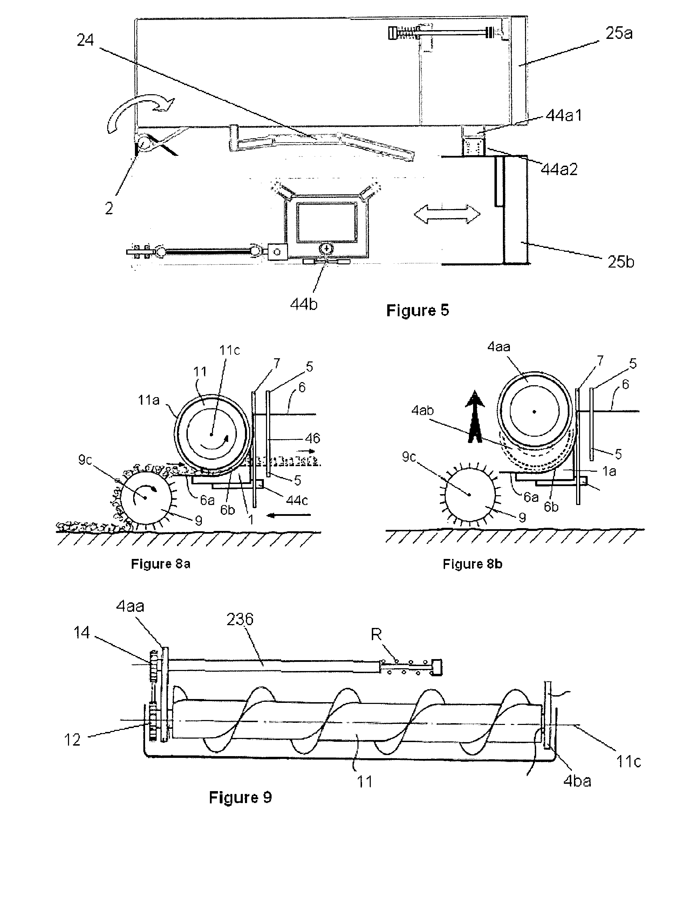

Comme présenté sur la figure 7, le cadre intermédiaire (7) porte directement ou indirectement deux demi-bâtis (1a, 1 b). Un premier demi-bâti droit (1b) par rapport à un observateur situé dans la cabine de pilotage de l'engin agricole, et un deuxième demi-bâti gauche (1a). Chaque demi-bâti comporte, comme représenté sur les figures 8a et 8b, une tôle de fond (6a, 6b) d'auge située à proximité de la surface la plus extérieure d'une des deux vis d'Archimède (11a, 11b) à filet inversé. Chaque vis est montée en rotation sur un flanc externe (4aa, respectivement 4bb) du bâti et sur un flanc interne (4ab, 4ba) adjacent en position de travail du flan interne d'un autre demi-bâti. Le flanc externe (4aa, respectivement 4bb) de chaque bâti comporte dans son carter un mécanisme (25a, 25b) de transmission du mouvement aux axes de rotation (11 c) de chaque vis d'Archimède (11 a, 11 b) à pas inversée et aux deux outils inférieurs (9) montés dans les flancs du demi-bâti. L'outil inférieur (9) dans le cas d'un ramasseur sera un rotor à dents et/ou à lames coupantes, éventuellement montées sur au moins un plateau rotatif, mais dans le cas d'une coupeuse-moissonneuse, l'outil inférieur sera un ensemble de dents actionnées d'un mouvement de cisaillement. Ce mouvement de cisaillement est fourni par un mécanisme d'entraînement (25a, 25b), enfermé dans chaque carter (4aa, 4bb) constituant respectivement le flanc gauche du demi-bâti gauche (1a) et du demi-bâti droit (1 b) et tel que celui représenté à la figure 2a. L'actionnement des deux mécanismes d'entrainement (25a, 25b) s'effectue par l'intermédiaire d'un axe de transmission (250) disposé dans la largeur du système, parallèlement à l'axe des outils (9, 11). Cet axe de transmission relie au moins un pignon du mécanisme du demi-bâti (1a) qui pivote à au moins un pignon du mécanisme du demi-bâti (1b) qui translate. Cet axe peut être monté dans la partie supérieure ou inférieure des demi-bâtis (1a, 1b) en intégrant un crabot (251) disposé à la jonction entre les deux demi-bâtis (1a, 1b). Selon une variante de réalisation, l'axe de transmission (250) est monté dans la partie supérieure ou inférieure du cadre intermédiaire (7). Le ramasseur comporte également un peigne (17), c'est-à-dire une barre transversale munie de dents, sur le dessus sur le carter du ramasseur au niveau du rotor à dents (9), pour comprimer légèrement les produits ramassés et les guider vers l'entrée de la vis (11). La vis (11) ramène les andains ramassés vers l'extrémité interne du demi-bâti, ces andains sont alors concentrés dans la partie centrale du système pour passer vers l'arrière du système dans la section centrale (46) du cadre oscillant, au centre du cadre intermédiaire (7) et du cadre fixe (5).

Selon un agencement particulier de la structure des demi-bâtis (1a, 1b), ceux-ci présentent une section en forme de U qui supportent, entre chaque jambe du U, deux outils montés pivotant dans les jambes du U. L'outil monté supérieur est formé par une vis hélicoïdale (11), également appelée vis d'Archimède, tandis que l'outil inférieur (9) est un moyen de ramassage formé par un rotor. Le sens de rotation du rotor inférieur (9) est inversé par rapport au sens de rotation de la vis d'un des demi-bâtis (1a, 1 b). Il convient de noter que la vis hélicoïdale d'un des demi-bâtis a un sens de rotation inversé ou un pas de vis inversé par rapport à la vis du demi-bâti adjacent.

Le mécanisme d'entrainement (25a, 25b) intégré dans chacun des carter (4aa, 4bb) fait intervenir au moins un élément permettant de faire varier les vitesses des rotors pour l'entrainement de chacun des outils (9, 11), ces vitesses de rotation pouvant varier de façon indépendante pour chacun des outils (9, 11). Selon un mode de réalisation préféré, la vitesse de rotation de l'outil inférieur (9) est de l'ordre de 70 à 130 tours/minute, inférieure à celle de la vis d'Archimède (11), qui est de l'ordre de 150 à 300 tours/minute, de sorte que lors de son fonctionnement, les risques de bourrage de la vis d'Archimède sont réduits et l'alimentation en fourrage est améliorée.

Selon un premier mode de réalisation particulier, le mécanisme d'entraînement, monté dans chaque carter (4) comporte, monté solidaire en rotation de l'axe (9c) de chaque outil inférieur (9), un pignon (18) entraîné par une chaîne et par le pignon supérieur (14b) pour transmettre le mouvement de rotation aux rotors à dents (9). Un deuxième pignon (12), monté solidaire en rotation de l'axe (11c) de chaque vis hélicoïdale, est également entraîné par une deuxième chaîne (16) montée sur le pignon (14a) pour donner le mouvement de rotation à la vis hélicoïdale.

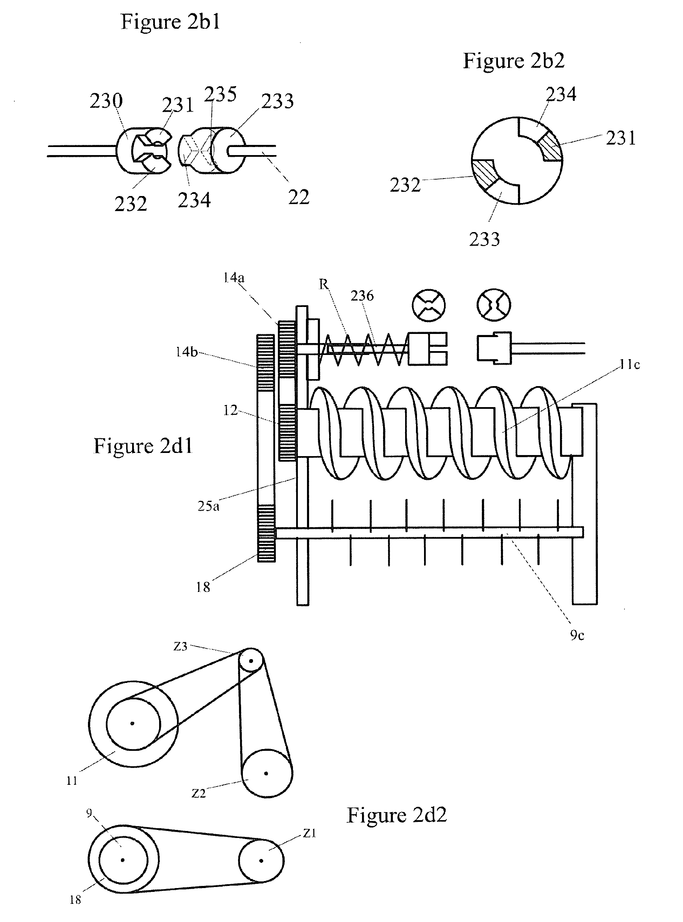

Selon un autre mode de réalisation particulier du mécanisme d'entrainement intégré dans les carter (4aa, 4bb), présenté sur la figure 2d1, l'outil inférieur (9) est entrainé au niveau de son pignon (18) par une chaine, elle-même entrainée par un rotor (14b) actionné par le boîtier d'entraînement de la machine agricole (30). La vis d'Archimède ou vis hélicoïdale (11) est, elle, entrainée par une première chaine, mise en rotation par un pignon double (14c) de renvoi, actionné par une seconde chaine mise en mouvement par un rotor (14a) commandé par le boitier d'entrainement de la machine agricole (30). Quels que soient les différents matériels connus et proposés à ce jour par différents constructeurs d'ensileuses, les mécanismes de transmission de rotation des rotors sont adaptés pour permettre aux outils de fonctionner avec des vitesses de rotation optimales. Ainsi, par exemple dans le cas de matériels « John Deere 5-6-7000 », les transmissions sont adaptés pour fonctionner avec des vitesses de rotations de rotor de 350 à 400 voire même 450 ou 530 tours/minute. Dans le cas de matériels « New Holland FX », les transmissions des rotations sont adaptées pour permettre un fonctionnement avec des vitesses de rotor de l'ordre de 300 à 700 tours/minute. Pour un fonctionnement avec des matériels « CLAAS 600, 820, 840, 850, 860, 870, 880, 890, 900 », les mécanismes de transmission permettent une adaptation à des vitesses de rotation de l'ordre de 320 à 500 tours/minute.

Une réalisation particulière de l'entrainement de l'outil inférieur est réalisée par l'action d'un rotor que d'un seul coté de l'appareil, c'est-à-dire au niveau d'un seul des demi-bâtis, par exemple au niveau du demi-bâti (1 a) qui pivote. La transmission de la rotation depuis un demi-bâti vers un autre s'effectue au niveau d'une jonction d'entrainement en rotation par crabot au niveau de la partie interne où les extrémités des deux demi-bâtis (1a, 1b) sont en contact.

Pour permettre une réponse aux problèmes de bourrage de la vis d'Archimède, à l'extrémité de chacun des demi-bâtis (1), un flasque se trouve disposé verticalement et sur lequel l'extrémité de l'axe d'une vis d'Archimède se trouve montée en rotation. Ce flasque est monté mobile par rapport au demi-bâti (1) dans un plan sensiblement perpendiculaire à l'axe de la vis d'Archimède pour permettre le déplacement d'au moins une portion de la vis d'Archimède par rapport au fond d'auge disposé sur le pourtour d'au moins une partie de la vis d'Archimède. Le déplacement de la vis (11) par rapport au fond d'auge (6) permet à un utilisateur d'avoir un accès aux zones susceptible de connaître un bourrage. Bien que ces flasques mobiles se situent préférentiellement aux extrémités externes des demi-bâtis, ceux-ci peuvent également se positionner sur les extrémités internes.

L'intégration d'un mécanisme réducteur de vitesse ou un inverseur de sens de rotation à l'entrainement fait également partie de l'invention. Les pignons (14a, 14b) sont montés respectivement sur un arbre cannelé du boitier d'entrainement en entrée duquel est monté, coulissant, un arbre cannelé (236) qui comporte à son extrémité un crabot (23). Le tube cannelé constitue avec l'arbre (236) une liaison télescopique en translation qui transmet son mouvement de rotation à un crabot (23) déplaçable en translation et pourvu d'une couronne (230) montée, par exemple, de deux ou trois dents (232) destinées à s'emboîter avec les dents (233, 234) de la couronne (235) montée solidaire d'un arbre de transmission (22). Cet arbre de transmission (22) est monté dans la partie supérieure ou inférieure du cadre intermédiaire (7). Les couronnes (230, 235) constituent ce que l'on appelle un système à crabot (23), dans lesquelles les dents complémentaires, après rotation au maximum d'un demi-tour, viennent s'engrener lorsque la couronne mobile (230) sollicitée par le ressort (R) en direction de la partie fixe (235) vient s'emboîter dans l'espace laissé libre par les dents (233, 234). La complémentarité entre les deux couronnes (230, 233) est réalisée préférentiellement de telle manière que les espaces entre les dents (231, 232, 234, 235) respectives des couronnes (230, 233) sont plus larges que les dents (231, 232, 234, 235) qui doivent s'y insérer. Cette différence de largeur permet aux couronnes (230, 233) de s'emboiter plus facilement avec une insertion facilitée des dents entre elles lors du déploiement de l'appareil. La largeur plus importante de l'espace entre les dents d'une première des couronnes (230, 233) pour faciliter l'insertion des dents de la seconde couronne n'interfère pas sur la qualité de la transmission de la rotation entre les arbres de transmission (22) et l'axe d'entrainement (236) cannelé, puisque le ressort (R) assure le contact des couronnes (230, 233) entre elles et que l'entrainement et la transmission de la rotation est assurée indépendamment de la largeur des dents (231, 232, 234, 235) respectives des couronnes (230, 233). Selon une particularité de réalisation, un des demi-crabots est mis en translation selon l'axe de l'arbre d'entrainement (236) par l'intermédiaire d'un dispositif mécanique et/ou hydraulique, par exemple vérin, qui permet ainsi le déboitement des demi-crabots en exerçant une translation qui s'oppose au ressort (R) pour faciliter le repliement du système d'entrainement d'outils et l'engrènement des demi-crabots en exerçant une translation dans le sens du ressort lorsque le système est déployé. La translation du demi-crabot sur l'axe d'entrainement s'effectue au niveau du moyeu au niveau duquel le demi-crabot interagit avec l'extrémité de l'arbre d'entrainement (236), l'interaction du demi-crabot sur l'axe d'entrainement et son moyeu se réalisant par un emboitement de type mâle/femelle.

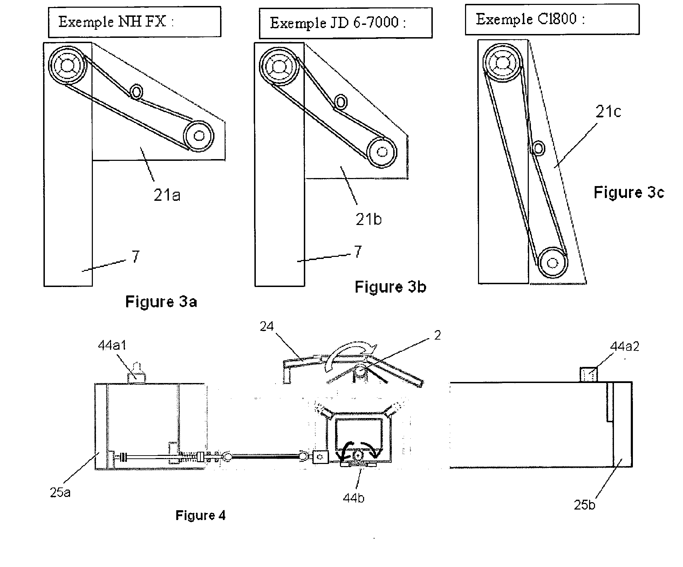

Dans une variante de réalisation, l'arbre de transmission (22) est également solidaire d'un pignon (210, figure 2a3), lequel pignon est destiné à recevoir une chaîne double permettant d'assurer la liaison avec un deuxième pignon (211) monté dans un carter (21), dans une position permettant la transmission de l'entraînement fourni par le boîtier d'entraînement de l'ensileuse (30) à travers une transmission du type cardan (20). Les différentes positions de montage du pignon (211) sont représentées aux figures 3a, 3b, 3c, pour montrer à titre d'exemple l'adaptabilité de l'invention, à différents matériels connus à ce jour et constitués par les matériels portant les références « New Holland FX », « John Deere 6000 », « John Deere 7000 », « CLAAS 800 », « CLAAS 900 », KRONE des différents constructeurs d'ensileuse.

Selon une particularité de réalisation, présentée sur la figure 2a2 l'énergie d'entrainement fournie par l'alimentation de la machine agricole (30), via la boite de transmission (19), aux mécanismes (25) de mise en mouvement des outils (9, 11) de la machine fait intervenir un dispositif de renvoi d'angle (19bis). Un premier arbre de transmission (20) de type cardan étant orienté vers l'avant du véhicule, et/ou vers le coté du véhicule qui supporte les outils, le dispositif de renvoi d'angle (19bis) transmet l'énergie de rotation vers un second arbre de transmission (20bis) de type cardan qui permet une légère oscillation avec un pignon (210) relié par une chaîne à l'arbre de transmission (22), monté sur le cadre intermédiaire (7), qui actionne l'axe d'entrainement cannelé (236).

Selon un autre mode de réalisation particulier, présenté sur la figure 2a1, la transmission de l'énergie d'entrainement depuis l'alimentation (19) de la machine agricole (30) vers les carters (4) de transmission des outils (9, 11) s'effectue au niveau d'un axe qui passe par le boitier d'alimentation (19) du système. Le cadre intermédiaire (7) positionne sur sa structure un arbre de transmission (22) dont l'axe est aligné avec l'axe de l'arbre de transmission (20) qui est actionné par le boitier d'entrainement (19) de l'alimentation de la machine agricole (30). Cet arbre de transmission (22), mis en rotation à une de ses extrémités par l'arbre de transmission (20) actionné par la machine agricole (30), présente à sa seconde extrémité une couronne destinée à permettre une transmission par crabot (23) avec une seconde couronne, positionnée sur l'extrémité de l'axe d'entrainement (236) cannelé et montée mobile en rotation sur son axe sur le demi-bâti (1a) qui pivote, pour transmettre l'énergie de rotation fournie par l'alimentation de la machine agricole (30) à un mécanisme d'entrainement (25a) situé dans un flan latéral du demi-bâti (1a). Selon une variante de réalisation, la transmission fait intervenir un boitier de renvoi d'angle (19bis) qui transmet l'énergie de rotation entre un premier arbre de transmission (20) orienté vers la face avant du véhicule, et/ou vers le coté du véhicule qui supporte les outils et un second arbre de transmission (20bis). Le second arbre de transmission (20bis) présente un axe qui est aligné sur celui de l'arbre de transmission (22) supporté par le cadre intermédiaire (7) avec lequel il interagit et/ou sur celui de l'axe d'entrainement cannelé (236). Les deux arbres de transmission (20, 20bis) qui interviennent avec le boitier de renvoi d'angle (19bis) sont formés par des cardans qui permettent une légère oscillation lors de la transmission de l'énergie de rotation ou tout autre type d'entrainement ou de transmission, par exemple crabot ou liaison chaine double, permettant, ou non, une légère oscillation dans la transmission de la rotation. L'articulation par crabot (23) fait également intervenir un ressort (R) pour que, une fois les demi-bâtis (1a, 1b) déployés, l'arbre de transmission (22) et l'axe d'entrainement (236) s'alignent et enclenchent l'articulation en crabot (23).

La figure 2c montre une particularité de l'axe de transmission (250) qui relie les deux mécanismes (25) situés aux extrémités externes des outils (9, 11), l'axe de transmission (250) est monté sur le cadre intermédiaire (7) parallèlement aux outils (9, 11). Positionné de cette manière dans le système, l'axe de transmission (250) est confondu avec l'axe d'entrainement cannelé (236) et l'arbre de transmission (22). L'extrémité de l'arbre de transmission se prolonge au niveau de son extrémité vers la partie droite du cadre intermédiaire par un tube (22b) pourvu de cannelures extérieures, lequel vient s'engrener à une partie femelle (22a) de l'arbre de transmission (22). Le tube cannelé (22) constitue avec l'arbre (22a) une liaison télescopique en translation et qui transmet son mouvement de rotation à une chaîne cinématique constituée de pignons d'entrainement (14a, 14b, 12 et 18), identique à celle décrite en liaison avec la figure 2b pour la partie gauche, mais située dans le carter (4bb) de la partie droite.

Dans le mode de réalisation représenté sur les figures 1, 2, 4 et 5, le demi-bâti gauche (1a) et le demi-bâti droit (1b) sont articulés l'un sur l'autre par un axe de rotation (2) et le demi-bâti droit (1b) est monté coulissant en translation parallèle au sol par rapport au cadre intermédiaire (7). Selon une particularité de réalisation, le demi-bâti (1a) qui pivote est monté pivotant par rapport au cadre intermédiaire (7) tandis que les deux demi-bâtis (1a, 1b) s'articulent entre eux par l'intermédiaire d'une biellette (24), par exemple montée sur une même face de chacun des demi-bâtis (1a, 1b) situé du coté du point d'articulation du demi-bâti (1a) qui pivote sur le cadre intermédiaire (7), de sorte que la translation du demi-bâti (1 b) qui translate entraine simultanément, par l'intermédiaire de la biellette (24), la bascule du demi-bâti (1a) qui pivote.

Toutefois, selon un mode de réalisation particulier, les deux demi-bâti (1a, 1b) peuvent s'articuler de façon autonome, en étant montées de façon indépendante sur le cadre intermédiaire (7).

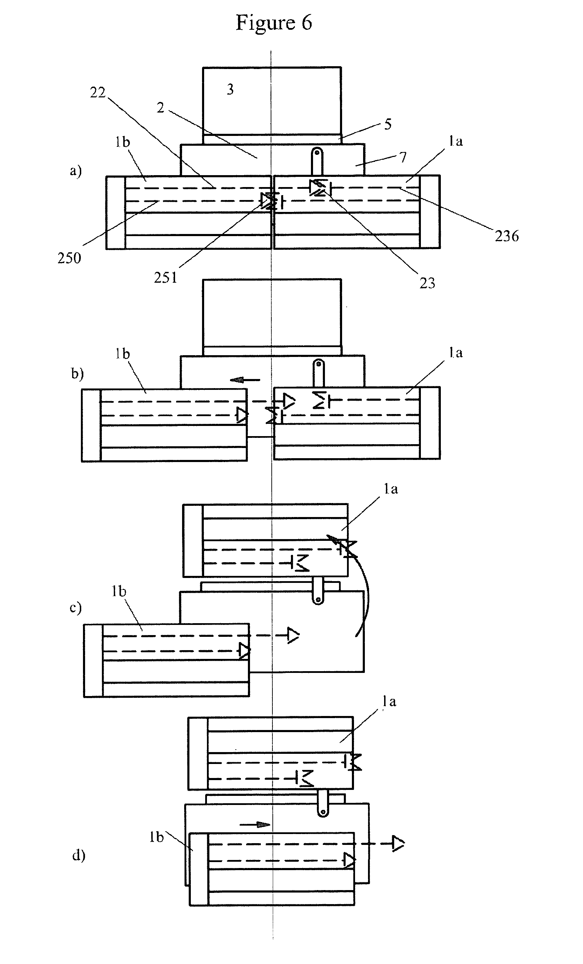

Selon ce mode de réalisation, la préparation à la route du dispositif s'effectue, comme représenté à la figure 6, en partant de la position de travail dans laquelle l'axe (2) d'articulation est disposé de façon à ce que les deux demi-bâtis soient placés symétriquement par rapport à la machine (3). Le conducteur après avoir débrayé le boitier (19) d'entrainement, actionne l'un des moyens de commande, par exemple hydraulique, assurant la translation du demi bâti droit (1b) pour lui faire effectuer une translation représentée sur la figure 6 vers la droite, c'est-à-dire en direction de l'extrémité extérieure du demi-bâti pivotant 1 a. Cette translation est d'une longueur suffisante pour permettre le désaccouplement du crabot (23) en dégageant les dents (231, 232) des dents (233, 234). Selon le système d'entrainement, cette translation pour désaccoupler les dents du crabot (23) peut être réalisée uniquement au niveau du crabot et de l'axe d'entrainement cannelé (236) grâce à un vérin particulier et non pas au niveau de l'ensemble du demi-bâti droit (1 b) qui translate.

L'étape suivante est la commande d'un vérin assurant la rotation du demi-bâti gauche (1a) pour le faire pivoter et l'amener au dessus du demi-bâti droit (1 b), comme représenté à la partie (c) de la figure 6. Enfin, les utilisateurs, simultanément ou à la suite de cette rotation dans le sens antihoraire, commandent la translation des deux bâtis superposés pour les amener en position symétrique par rapport à la cabine (3) de la machine grâce à un seul élément de commande pour les deux mouvements des demi-bâtis. La représentation de la figure 6 est une représentation schématique des demi-bâtis vus de l'extérieur en se plaçant devant la machine. Toutes ces commandes de déplacement sont réalisées par des dispositifs par exemple à vérin, classiques pour l'homme de métier.

Les opérations de passage de la position route à la position travail s'effectueront en sens inverse par une étape de translation du demi-bâti droit suivie d'une étape de rotation dans le sens horaire du demi-bâti gauche, suivie d'une étape de translation d'au moins un des demi-bâtis par rapport au cadre intermédiaire jusqu'à emboitement des crabots ou mise en compression du ressort (R) et une étape d'embrayage du boitier (30) de transmission. Le moyen de translation est constitué par une coulisse et un ou plusieurs galets, portés par le cadre et le demi-bâti (1b) qui est déplacé en translation; la commande de la translation, comme celle du basculement du demi-bâti (1a) pivotant, est assurée par vérin hydraulique alimenté à partir de la source de fluide hydraulique de la machine agricole, ce ou ces vérins hydrauliques étant commandés par le conducteur.

Dans un mode de réalisation un seul vérin commande à la fois la translation et la rotation. Ce mode de réalisation peut, dans le cadre d'une réalisation particulière, être réalisée de sorte que le demi-bâti (1a) qui pivote est monté pivotant par rapport au cadre intermédiaire (7) tandis que les deux demi-bâtis (1a, 1b) s'articulent entre eux par l'intermédiaire d'une biellette ou d'un axe (24) ou tout autre type de liaison entre les deux demi-bâtis permettant un mouvement concomitant entre les deux demi-bâtis. Cette biellette ou cet axe (24) est par exemple monté sur une même face de chacun des demi-bâtis (1a, 1b) situé du coté du point d'articulation du demi-bâti (1a) qui pivote sur le cadre intermédiaire (7). Dans cette réalisation particulière, la translation du demi-bâti (1 b) qui translate entraine simultanément, par l'intermédiaire de la biellette (24), la bascule du demi-bâti (1a) qui pivote, et inversement la bascule du demi-bâti (1a) qui pivote entraine simultanément la translation du demi-bâti (1 b) qui translate.

Selon une variante de réalisation avec un seul vérin de commande pour la réalisation simultanée des déplacements respectifs, par translation ou pivotement, des demi-bâtis (1b, , 1a), les deux demi-bâtis s'articulent entre eux au niveau d'un axe de pivotement positionné au niveau d'un point de contact situé sur la face interne des demi-bâtis, ce point de contact formant un axe de pivotement des demi-bâtis entre eux. Le demi-bâti (1b) qui translate est monté en translation sur le cadre intermédiaire (7) tandis que le demi-bâti (1a) qui pivote s'articule avec le cadre intermédiaire (7) via une biellette (24). Ainsi, le déplacement sous l'action d'un vérin d'un des demi-bâtis (1a, 1b), par pivotement ou translation, entraine simultanément le déplacement, par translation ou pivotement, du second demi-bâti (1 b, 1 a).

Toutefois, selon un mode de réalisation particulier, les deux demi-bâti (1a, 1b) peuvent s'articuler de façon autonome, en étant montés de façon indépendante sur le cadre intermédiaire (7).

Dans un mode de réalisation, le demi-bâti (1b) qui se translate et le demi-bâti (1a) pivotant principalement ont chacun une vis de transfert à filets de sens opposé.

La figure 7 représente un autre mode d'utilisation de l'invention dans lequel on a à faire à un engin agricole équipé de demi-bâtis dont l'un, le demi-bâti gauche (1a) est monté pivotant sur le cadre intermédiaire (7), et l'autre demi-bâti (1b), représenté à gauche vu de l'extérieur, mais situé à droite lorsqu'on est dans la cabine, est monté en translation par rapport au cadre intermédiaire (7). Dans ce cas le système à crabot (23) doit comporter des dentures permettant le désemboîtement des dentures lors de la rotation relative des demi-bâtis. Ces dentures auront des formes trapézoïdales pour permettre justement la rotation et le désemboîtement du crabot. Dans ce cas, le ressort (R) devra être renforcé pour qu'en position de travail le crabot ne soit pas amené à passer dans la position représentée à la figure 7, dans laquelle les dents se sont désaccouplées.

Une fois la rotation du demi-bâti gauche effectuée dans le sens antihoraire, le conducteur commande simplement la translation du demi-bâti droit, pour l'amener en dessous du demi-bâti gauche dans une position symétrique par rapport à l'axe de symétrie de la machine.

Dans ce mode de réalisation, pour passer de la position route à la position de travail, l'opérateur effectue les opérations en sens inverse et ensuite commande l'entraînement du boîtier d'entraînement (19) qui va entraîner en rotation l'arbre (22) ce qui va provoquer la mise en place des dents du crabot pour qu'elles s'emboîtent l'une dans l'autre. Il est ainsi réalisé un engin agricole de ramassage ou de moissonnage à grande largeur d'outils permettant une mise en position route ou en position travail sans intervention manuelle de l'utilisateur.

Le déploiement des demi-bâtis (1a, 1 b) et inversement, le repliement de ces demi-bâtis pour leur transport sur route peut se réaliser par un actionnement successif de vérins (45a, 45b), pneumatiques ou hydrauliques, par un utilisateur du système de l'invention, un vérin pouvant être utilisé pour le déplacement, pivotement (45a) ou translation (45b), propre à chacun des demi-bâtis (1a, 1b) ou commun aux deux demi-bâtis (1a, 1b). Cependant, selon un mode de réalisation préféré, le système intègre un ou plusieurs dispositifs de fin de course montés sur les demi-bâtis (1). Ces dispositifs de fin de course sont formés par des détecteurs et/ou des contacteurs positionnés sur des points stratégiques des demi-bâtis (1) et/ou du cadre intermédiaire (7) et associés à des interrupteurs qui stoppent et/ou déclenchent le fonctionnement de vérins définis. Ainsi, lorsque le positionnement d'un demi-bâti par un premier vérin arrive en bout de course et/ou lorsqu'un connecteur monté stratégiquement sur le demi-bâti entre en contact avec un contacteur monté sur la structure de l'autre demi-bâti ou du cadre intermédiaire (7), ce contact ou ce positionnement déclenche un mécanisme hydraulique ou électrique qui stoppe le fonctionnement du premier vérin. De plus, selon les déplacements prévus pour positionner les demi-bâtis, le contact ou le positionnement du demi-bâti déclenche le fonctionnement d'au moins un second vérin qui contrôle un autre déplacement pour un autre demi-bâti. Ces dispositifs de fin de course peuvent également être montés sur des dispositifs de verrouillage (44) des demi-bâtis (1a, 1b) sur le cadre oscillant (5, 7) pour éviter un déboitement des demi-bâtis ou sur des dispositifs de blocage de la bascule des éléments (5, 7) du cadre oscillant pour éviter une bascule du système lors du déplacement des demi-bâtis.

Selon la succession de déplacements nécessaire, il peut être envisagé que le système de l'invention comprenne au moins un dispositif de fin de course associé aux rotations du demi-bâti (1a) qui pivote et/ou au moins un dispositif de fin de course associé aux translations du demi-bâti (1b) qui translate, vers l'intérieur et vers l'extérieur du système, par rapport au cadre intermédiaire (7). Dans le cas d'un pivotement du demi-bâti (1a) concomitant avec la translation du demi-bâti (1 b) grâce à une biellette (24), il peut n'être utilisé qu'un seul dispositif de fin de course pour le déploiement du système et un qu'un seul dispositif de fin de course pour le repliement du système.

La succession des déplacements déclenchés successivement par les dispositifs de fin de course est préprogrammée. De plus, l'enclenchement du premier déplacement est réalisé par l'utilisateur du système à partir d'une interface de commande qui comprend au moins un moyen d'enclenchement du dépliement du système en position de travail, un moyen d'enclenchement du repliement du système en position de route et, éventuellement, un moyen d'arrêt d'urgence des déplacements.

Pour permettre un déploiement et/ou un repliement avec des déplacements optimaux, et notamment des translations, des demi-bâtis du système de l'invention sur le cadre intermédiaire (7), le cadre intermédiaire doit présenter une structure la plus large possible mais dont les extrémités, de part et d'autre du système, ne doivent pas se positionner au-delà des points d'appui de la machine agricole (30) sur le sol. Ces limites assurent le maintien des deux demi-bâtis dans un volume où ils ne sont pas susceptibles de déplacer le centre de gravité du système au-delà de la surface de sustentation du système monté sur la machine agricole (30), ensileuse ou moissonneuse-batteuse. De plus, pour éviter une bascule accidentelle du système d'entrainement lors du déploiement des demi-bâtis, le cadre oscillant comprend des moyens de blocage qui empêche les mouvements du cadre intermédiaire (7) par rapport au cadre (5) solidarisable.

Pour éviter un déboitement des demi-bâtis (1a, 1b) lorsque le système de l'invention est déplié en dehors des utilisations de la machine, des moyens de verrouillage (44a1, 44a2, 44b) assurent un maintien des demi-bâtis fixés entre eux. D'autres moyens de verrouillage permettent de maintenir les deux demi-bâtis fixés à une partie du cadre intermédiaire (44c), par exemple, dans la partie basse du cadre. Ces moyens de verrouillage montés sur les demi-bâtis et/ou sur le cadre oscillant peuvent prendre la forme des éléments de verrouillage associé par paire de type mâle/femelle.

Selon une particularité, lors du déploiement et du repliement des demi-bâtis du système, les procédés comprennent une étape de blocage, respectivement de déblocage, de la bascule des éléments du cadre oscillant entre eux et/ou une étape de déverrouillage, respectivement de verrouillage, des demi-bâtis (1a, 1b) entre eux ou sur le cadre intermédiaire (7). La succession de ces opérations de blocage, déblocage et verrouillage, déverrouillage peut être contrôlée et/ou gérée par des dispositifs de fin de course associés ou combinés aux mécanismes de déplacements des demi-bâtis (1a, 1b).

II doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes ;

## Revendications

1. Système d'entraînement d'outils pour machines agricoles comportant un premier demi-bâti (1 b) supportant des outils, se translatant entre une position de travail en alignement avec un deuxième demi-bâti (1a) pourvu d'outils (9, 11) pivotant entre la position de travail et une position de transport où le deuxième demi-bâti (1a) est superposé sur le premier demi-bâti (1 b), les outils (9, 11) montés dans chaque bâti étant entraînés par au moins un moyen (25) disposé à l'extrémité externe d'au moins un des demi-bâtis (1) lorsque ceux-ci sont en position de travail, le premier demi-bâti (1b) étant monté en translation sur un dispositif à cadre oscillant, comportant un cadre d'attelage solidarisé (5) à l'engin agricole et un cadre intermédiaire (7) permettant des débattements angulaires par rapport au cadre (5) solidaire de l'engin selon un axe de rotation longitudinal et parallèle à l'axe de symétrie de la machine, le système d'entraînement est **caractérisé en ce qu'**il comporte :
- un dispositif de transmission de l'entraînement provenant du boîtier d'entraînement (19) de la machine agricole, vers un axe d'entrainement (236) du moyen d'entrainement (25) des outils disposé à l'extrémité du demi-bâti pivotant (1a), lors de la mise en place du demi-bâti (1a) pivotant de sa position de repliement vers sa position de travail dépliée, le dispositif de transmission comprenant au moins un arbre de transmission (22) monté sur la partie supérieure ou inférieure du cadre intermédiaire (7),
- un axe de transmission (250) de l'entrainement entre un moyen d'entrainement (25) disposé à l'extrémité externe du demi-bâti (1a) qui pivote et le moyen d'entrainement (25) disposé à l'extrémité externe du demi-bâti (1b) qui translate, lors de la mise en place du demi-bâti (1a) pivotant de sa position de repliement vers sa position de travail dépliée, cet axe de transmission (250) étant soit positionné dans la partie supérieure ou inférieure de chaque demi-bâti (1a, 1b), soit positionné dans la partie supérieure ou inférieure du cadre intermédiaire (7) où au moins une portion de l'axe de transmission est confondue avec l'axe d'entrainement (236) du moyen d'entrainement (25) des outils disposé à l'extrémité du demi-bâti pivotant (1a) et l'arbre de transmission (22) monté sur la partie supérieure ou inférieure du cadre intermédiaire (7).

2. Système d'entrainement d'outils pour machines agricoles selon la revendication 1, **caractérisé en ce que** les outils comprennent un outil supérieur formé par une vis d'Archimède (11) et un outil inférieur formé par un rotor de ramassage (9) de sens de rotation inversé par rapport au sens de rotation d'une des vis, la vis d'un demi-bâti ayant un pas de vis inversé par rapport à la vis du demi-bâti adjacent ou un sens de rotation inversé.

3. Système d'entraînement d'outils pour machines agricoles selon une des revendications 1 ou 2, **caractérisé en ce que** les outils (9, 11) montés dans chaque bâti sont entraînés par au moins un moyen (25) disposé à l'extrémité externe de chacun des demi-bâtis (1).

4. Système d'entraînement d'outils pour machines agricoles selon une des revendications 1 ou 2, **caractérisé en ce que** les outils (9, 11) montés dans chaque bâti sont entraînés par au moins un moyen (25) disposé à l'extrémité externe du demi-bâti (1a) qui pivote, les outils du demi-bâti (1a) qui pivote engrenant par crabot avec les outils du demi-bâti (1 b) qui translate.

5. Système d'entraînement d'outils pour machines agricoles selon une des revendications 1 à 4, **caractérisé en ce que** le demi-bâti (1a) qui pivote est monté articulé sur le cadre intermédiaire (7).

6. Système d'entraînement d'outils pour machines agricoles selon une des revendications 1 à 4, **caractérisé en ce que** le demi-bâti (1a) qui pivote est monté articulé sur le demi-bâti (1b) qui se translate, ce dernier étant monté en translation sur le cadre intermédiaire (7).

7. Système d'entrainement d'outils pour machines agricoles selon la revendication 6, **caractérisé en ce que** le demi-bâti (1a) qui pivote s'articule avec le cadre intermédiaire par l'intermédiaire d'une biellette ou d'un axe (24) de sorte qu'au moins un déplacement particulier, par translation ou bascule, d'un des demi-bâtis entraine concomitamment le déplacement, par bascule ou par translation, du second demi-bâti.

8. Système d'entraînement d'outils pour machines agricoles selon une des revendications 1 à 4, **caractérisé en ce que** le demi-bâti (1a) qui pivote est monté articulé sur le cadre intermédiaire (7) indépendamment du demi-bâti (1 b) qui se translate, le demi-bâti (1 b) qui se translate étant monté en translation sur le cadre intermédiaire (7).

9. Système d'entrainement d'outils pour machines agricoles selon la revendication 8, caractérisé **en** ce que le demi-bâti (1a) qui pivote s'articule avec le demi-bâti qui translate par l'intermédiaire d'une biellette ou d'un axe (24) de sorte qu'au moins un déplacement particulier, par translation ou bascule, d'un des demi-bâtis entraine concomitamment le déplacement, par bascule ou par translation, du second demi-bâti.

10. Système d'entraînement d'outils pour machines agricoles selon une des revendications précédentes, **caractérisé en ce que** le système comprend au moins un déclencheur actionnant le fonctionnement d'au moins un premier vérin qui assure le déplacement d'au moins un demi-bâti (1b) lors d'une translation vers l'intérieur et/ou l'extérieur du demi-bâti qui translate et/ou du pivotement du demi-bâti (1a) qui pivote, et **en ce qu'**au moins un dispositif de fin de course est monté sur un des demi-bâtis (1) mobile du système de sorte que l'arrivée d'un demi-bâti (1) déplacé par le premier vérin en fin de parcours actionne un mécanisme qui stoppe le fonctionnement du premier vérin qui contrôle le déplacement du demi-bâti (1) et/ou déclenche le déplacement d'un des demi-bâtis (1) par un second vérin.

11. Système d'entrainement d'outils pour machines agricoles selon une des revendications précédentes, **caractérisé en ce que** les demi-bâtis (1a, 1b) ont une section en forme de U et supportent, entre les jambes du U, les deux outils montés pivotant dans les jambes du U.

12. Système d'entraînement d'outils pour machines agricoles selon une des revendications précédentes, **caractérisé en ce que** des moyens d'établir automatiquement une liaison d'entraînement sont constitués d'un dispositif à crabot (23) dont un élément (235) est monté solidaire de l'arbre de transmission (22) positionné dans la partie supérieure ou inférieure du cadre intermédiaire (7) et l'autre élément (230) complémentaire est monté en rotation dans un carter supportant les moyens d'entraînement des outils, cette partie de crabot montée sur un axe d'entrainement (236) étant sollicitée en permanence par un ressort (R) dans sa position la plus en saillie dans laquelle elle engrène avec le demi-crabot (230) solidaire du bâti et dans une position rétractée, dans laquelle le ressort (R) est comprimé lorsque, par exemple, les dents (231, 232, 233, 234) de chacun des demi-crabots (230, 235) ne se sont pas emboîtées.

13. Système d'entraînement d'outils pour machines agricoles selon la revendication 12, **caractérisé en ce que** les moyens d'établir automatiquement une liaison d'entraînement constitués d'un dispositif à crabot (23) comprennent un dispositif permettant la translation de la partie du crabot sollicité par le ressort (R) sur son moyeux et selon un axe parallèle à l'axe d'entrainement (236), le dispositif permettant un écartement et/ou un engrènement des demi-crabots (230, 233) lors du déploiement ou du repliement du système.

14. Système d'entraînement d'outils pour machines agricoles selon une des revendications précédentes, **caractérisé en ce que** le dispositif de transmission de l'entraînement provenant du boîtier d'entraînement (30) de la machine agricole vers un axe d'entraînement (236) comprend un alignement de l'arbre de transmission (22) situé dans la partie supérieure ou inférieure du cadre intermédiaire (7), qui forme le moyen d'entrainement des outils disposés à l'extrémité du demi-bâti pivotant (1a), avec l'axe d'au moins une transmission de type à cardan qui transmet, en permettant une légère oscillation, une énergie de rotation fournie par la sortie du boitier d'entrainement (19) de la machine agricole.

15. Système d'entraînement d'outils pour machines agricoles selon la revendication 14, **caractérisé en ce que** le dispositif de transmission de l'entrainement comprend un mécanisme de renvoi d'angle (19bis) entre une première transmission (20) de type cardan ou crabot orientée depuis la sortie du boitier d'entrainement (19) vers la face de la machine agricole qui supporte les outils et une seconde transmission (20bis) de type cardan alignée sur l'arbre de transmission (22) situé dans la partie supérieure ou inférieure du cadre intermédiaire (7).

16. Système d'entraînement d'outils pour machines agricoles selon une des revendications 1 à 13, **caractérisé en ce que** l'arbre de transmission (22) situé dans la partie supérieure ou inférieure du cadre intermédiaire est relié par un renvoi au boîtier d'entraînement (19) de la machine agricole, le renvoi comportant au moins une transmission de type à cardan permettant une légère oscillation avec un pignon (211) relié par une chaîne à l'arbre de transmission du cadre intermédiaire (7).

17. Système d'entraînement d'outils pour machines agricoles selon la revendication 16, **caractérisé en ce que** le dispositif de transmission de l'entrainement comprend un mécanisme de renvoi d'angle entre une première transmission (20) de type cardan ou crabot orientée vers la face de la machine agricole qui supporte les outils et une seconde transmission (20bis) de type cardan qui permet une légère oscillation avec un pignon (211) relié par une chaîne à l'arbre de transmission du cadre intermédiaire (7).

18. Système d'entraînement d'outils pour machines agricoles selon la revendication 16 ou 17, **caractérisé en ce que** la position du pignon (211) lié par un cardan au boîtier d'alimentation ou au boitier de renvoi d'angle est définie en fonction du type de la machine sur lequel l'équipement vient s'adapter.

19. Système d'entraînement d'outils pour machines agricoles selon une des revendications 16 à 18, **caractérisé en ce que** le pignon (211) peut être situé approximativement à mi-hauteur du cadre.

20. Système d'entraînement d'outils pour machines agricoles selon une des revendications 16 à 18, **caractérisé en ce que** le pignon (211) peut être situé à proximité du bord inférieur du cadre.

21. Système d'entrainement d'outils pour machines agricoles selon une des revendications précédentes, **caractérisé en ce que** l'extrémité d'au moins un des demi-bâtis (1) intègre un flasque disposé verticalement et sur laquelle se trouve monté en rotation l'extrémité de l'axe d'une vis d'Archimède, le flasque étant monté mobile par rapport au demi-bâti (1) dans un plan sensiblement perpendiculaire à l'axe de la vis d'Archimède pour permettre le déplacement d'au moins une portion de la vis d'Archimède par rapport au fond d'auge disposé sur le pourtour d'au moins une partie de la vis d'Archimède.

22. Système d'entrainement d'outils pour machines agricoles selon une des revendications précédentes, **caractérisé en ce que** des moyens de verrouillage permettent de maintenir les deux demi-bâtis fixés l'un par rapport à l'autre pour éviter un débattement relatif entre les demi-bâtis en dehors des utilisations de la machine lorsque les demi-bâtis sont dépliés.

23. Procédé automatisé de préparation à la route d'un engin agricole à deux demi-bâtis (1a, 1b) superposables l'un sur l'autre en position de route et alignables l'un adjacent à l'autre en position de travail intégrant un système d'entrainement d'outils selon une des revendications précédentes, **caractérisé en ce qu'**il comporte une étape de rotation du demi-bâti (1a) pivotant pour désolidariser un mécanisme à crabot (23) du mécanisme complémentaire monté soit sur un cadre intermédiaire (7) soit sur les demi-bâtis (1a, 1b), et une étape de translation du demi-bâti (1b) qui est monté en translation par rapport au cadre intermédiaire (7), la transmission (236) reliée sur le cadre intermédiaire (7) au moyen d'entraînement (22) des outils (9, 11) se rétractant pour que les moyens d'entraînement externes respectifs du demi-bâti (1 b) translaté et du demi-bâti (1a) pivoté se retrouvent superposés l'un au dessus de l'autre.

24. Procédé automatisé de préparation à la route d'un engin agricole à deux bâtis (1a, 1b) superposables l'un sur l'autre selon la revendication précédente, **caractérisé en ce que** le déplacement, par pivotement ou translation, d'un des demi-bâtis se réalise concomitamment au déplacement, par translation ou par pivotement, du second demi-bâti.

25. Procédé automatisé de préparation à la route d'un engin agricole à deux bâtis (1a, 1b) superposables l'un sur l'autre selon la revendication 23, **caractérisé en ce que** la désolidarisation du crabot se réalise par une première translation du demi-bâti (1b) qui translate et/ou d'un des demi-crabots d'une certaine distance pour permettre le désaccouplement des demi-crabots (23) et/ou écarter les deux demi-bâtis, suivie de la rotation du demi-bâti (1a) qui pivote puis de la translation vers l'intérieur du demi-bâti (1 b) qui translate pour le positionner sous le demi-bâti (1 a) pivoté.

26. Procédé de préparation à la route selon une des revendications précédentes, **caractérisé en ce que** le procédé comprend au préalable :
- une étape de verrouillage du cadre intermédiaire sur le cadre d'attelage, et/ou
- une étape de déverrouillage des demi-bâtis l'un sur l'autre, et/ou
- une étape de déverrouillage des demi-bâtis sur le cadre intermédiaire.

27. Procédé de préparation à la route sans intervention manuelle d'un engin agricole à deux demi-bâtis (1a, 1b) articulés l'un sur l'autre et dont l'un des bâti (1b) est monté en translation sur le cadre intermédiaire (7) intégrant un système d'entraînement d'outils selon une des revendications 1 à 22, **caractérisé en ce que** le procédé comporte :
- une première étape de déplacement d'au moins un des demi-bâtis (1a, 1b) de l'axe de symétrie de l'engin vers l'extérieur et/ou d'un des demi-crabots d'une certaine distance pour permettre le désaccouplement des crabots (23) ;
- une étape de pivotement des bâtis (1 a, 1 b) l'un sur l'autre;
- une étape de déplacement des deux bâtis (1a, 1b) dans une direction de translation opposée à celle de la première étape pour amener les axes de symétrie en concordance avec l'axe de symétrie de l'engin agricole (3).

## Patentansprüche

1. System zum Antreiben von Werkzeugen für Landmaschinen, aufweisend einen ersten Werkzeuge abstützenden Halbrahmen (1b), der sich in Translation bewegt zwischen einer Arbeitsposition in Ausrichtung zu einem mit Werkzeugen (9, 11) versehenen zweiten Halbrahmen (1a), der schwenkbar ist zwischen der Arbeitsposition und einer Transportposition, in der der zweite Halbrahmen (1a) über dem ersten Halbrahmen (1b) angeordnet ist, wobei die in jedem Rahmen montierten Werkzeuge (9, 11) angetrieben werden durch mindestens ein Mittel (25), das am äußeren Ende von mindestens einem der Halbrahmen (1) angeordnet ist, wenn sich diese in der Arbeitsposition befinden, wobei der erste Halbrahmen (1b) in Translation an einer Vorrichtung mit Schwingrahmen montiert ist, aufweisend einen Kupplungsrahmen (5), der fest mit der Landmaschine verbunden ist, und einen Zwischenrahmen (7), der Winkelauslenkungen bezüglich des mit der Maschine fest verbundenen Rahmens (5) entlang einer längs und parallel zu der Symmetrieachse der Maschine verlaufenden Rotationsachse ermöglicht, wobei das Antriebssystem **dadurch gekennzeichnet** ist, dass es aufweist:
- eine Übertragungsvorrichtung für den aus dem Antriebsgehäuse (19) der Landmaschine kommenden Antrieb an eine Antriebsachse (236) des Antriebsmittels (25) der Werkzeuge, das am Ende des schwenkbaren Halbrahmens (1a) angeordnet ist, beim in-Position-Bringen des schwenkbaren Halbrahmens (1a) aus seiner Einklapp-Position in seine Ausklapp-Arbeitsposition, wobei die Übertragungsvorrichtung mindestens eine Übertragungswelle (22) aufweist, die an dem oberen oder unteren Abschnitt des Zwischenrahmens (7) montiert ist,
- eine Übertragungsachse (250) für den Antrieb zwischen einem Antriebsmittel (25), das am äußeren Ende des schwenkenden Halbrahmens (1a) angeordnet ist, und dem Antriebsmittel (25), das am äußeren Ende des sich in Translation bewegenden Halbrahmens (1b) angeordnet ist, beim in-Position-Bringen des schwenkbaren Halbrahmens (1a) aus seiner Einklapp-Position in Richtung seine Ausklapp-Arbeitsposition, wobei die Übertragungsachse (250) entweder in dem oberen oder dem unteren Abschnitt von jedem Halbrahmen (1a, 1b) positioniert ist, oder in dem oberen oder dem unteren Abschnitt des Zwischenrahmens (7) positioniert ist, wo zumindest ein Abschnitt der Übertragungsachse mit der Antriebsachse (236) des am Ende des schwenkenden Halbrahmens (1a) angeordneten Antriebsmittels (25) der Werkzeuge und der an dem oberen oder dem unteren Abschnitt des Zwischenrahmens (7) montierten Übertragungswelle (22) zusammengenommen ist.

2. System zum Antreiben von Werkzeugen für Landmaschinen gemäß Anspruch 1, **dadurch gekennzeichnet, dass** die Werkzeuge aufweisen: ein oberes Werkzeug, das durch eine Förderschnecke (11) ausgebildet ist, und ein unteres Werkzeug, das durch einen Sammelrotor (9) ausgebildet ist, dessen Drehrichtung bezüglich der Drehrichtung einer der Schnecken umgekehrt ist, wobei die Schnecke eines Halbrahmens eine Gewindesteigung, die bezüglich der Schnecke des benachbarten Halbrahmens umgekehrt ist, oder eine umgekehrte Drehrichtung hat.

3. System zum Antreiben von Werkzeugen für Landmaschinen gemäß einem der Ansprüche 1 oder 2, **dadurch gekennzeichnet, dass** die in jedem Rahmen montierten Werkzeuge (9, 11) durch mindestens ein Mittel (25) angetrieben sind, das am äußeren Ende von jedem der Halbrahmen (1) angeordnet ist.

4. System zum Antreiben von Werkzeugen für Landmaschinen gemäß einem der Ansprüche 1 oder 2, **dadurch gekennzeichnet, dass** die in jedem Rahmen montierten Werkzeuge (9, 11) durch mindestens ein Mittel (25) angetrieben sind, das am äußeren Ende des schwenkenden Halbrahmens (1a) angeordnet ist, wobei die Werkzeuge des schwenkenden Halbrahmens (1a) formschlüssig mit den Werkzeugen des sich in Translation bewegenden Halbrahmens (1b) ineinandergreifen.

5. System zum Antreiben von Werkzeugen für Landmaschinen gemäß einem der Ansprüche 1 bis 4, **dadurch gekennzeichnet, dass** der schwenkende Halbrahmen (1a) gelenkig an dem zwischenrahmen (7) gelagert ist.

6. System zum Antreiben von Werkzeugen für Landmaschinen gemäß einem der Ansprüche 1 bis 4, **dadurch gekennzeichnet, dass** der schwenkende Halbrahmen (1a) gelenkig an dem sich in Translation bewegenden Halbrahmen (1b) gelagert ist, wobei letzterer in Translation an dem Zwischenrahmen (7) montiert ist.

7. System zum Antreiben von Werkzeugen für Landmaschinen gemäß Anspruch 6, **dadurch gekennzeichnet, dass** der schwenkende Halbrahmen (1a) über einen Schwingarm oder eine Achse (24) gelenkig mit dem Zwischenrahmen verbunden ist, so dass zumindest eine bestimmte Bewegung eines der Halbrahmen, entweder durch Translation oder durch Kippen, zusammenwirkend die Bewegung des zweiten Halbrahmens durch Kippen oder durch Translation antreibt.

8. System zum Antreiben von Werkzeugen für Landmaschinen gemäß einem der Ansprüche 1 bis 4, **dadurch gekennzeichnet, dass** der schwenkende Halbrahmen (1a) gelenkig an dem Zwischenrahmen (7) gelagert ist, unabhängig von dem sich in Translation bewegenden Halbrahmen (1b), wobei der sich in Translation bewegende Halbrahmen (1b) in Translation an dem Zwischenrahmen (7) montiert ist.

9. System zum Antreiben von Werkzeugen für Landmaschinen gemäß Anspruch 8, **dadurch gekennzeichnet, dass** der schwenkende Halbrahmen (1a) über einen Schwingarm oder eine Achse (24) mit dem sich in Translation bewegenden Halbrahmen gelenkig gelagert ist, so dass zumindest eine bestimmte Bewegung eines der Halbrahmen, entweder durch Translation oder durch Kippen, zusammenwirkend die Bewegung des zweiten Halbrahmens durch Kippen oder durch Translation antreibt.

10. System zum Antreiben von Werkzeugen für Landmaschinen gemäß einem der vorhergehenden Ansprüche, **dadurch gekennzeichnet, dass** das System aufweist: mindestens eine Auslösevorrichtung, die die Funktion mindestens eines ersten Zylinders in Gang setzt, der die Bewegung mindestens eines Halbrahmens (1b) bei einer Translation in Richtung des Inneren und/oder des Äußeren des sich in Translation bewegenden Halbrahmens und/oder beim Schwenken des schwenkenden Halbrahmens (1a) sicherstellt, und dass mindestens eine Ende-des-Weges-Vorrichtung bewegbar an einem der Halbrahmen (1) des Systems montiert ist, so dass das Erreichen eines durch den ersten Zylinder bewegten Halbrahmens (1) des Endes des Arbeitsweges einen Mechanismus auslöst, der die Funktion des ersten Zylinders anhält, der die Bewegung des Halbrahmens (1) steuert, und/oder die Bewegung eines der Halbrahmen (1) durch einen zweiten Zylinder auslöst.

11. System zum Antreiben von Werkzeugen für Landmaschinen gemäß einem der vorhergehenden Ansprüche, **dadurch gekennzeichnet, dass** die Halbrahmen (1a, 1b) einen U-förmigen Querschnitt haben und zwischen den Schenkeln des U die beiden Werkzeuge abstützen, die schwenkbar in den Schenkeln des U montiert sind.

12. System zum Antreiben von Werkzeugen für Landmaschinen gemäß einem der vorhergehenden Ansprüche, **dadurch gekennzeichnet, dass** Mittel zum automatischen Herstellen einer Antriebsverbindung aus einer Klauenvorrichtung (23) gebildet sind, wobei ein Element (235) davon fest an der Übertragungswelle (22) montiert ist, die in dem oberen oder dem unteren Abschnitt des Zwischenrahmens (7) angeordnet ist, und das andere komplementäre Element (230) drehbar in einem Gehäuse montiert ist, das die Antriebsmittel der Werkzeuge abstützt, wobei der Klauenabschnitt, der an einer Antriebsachse (236) montiert ist, permanent von einer Feder (R) in seine am meisten hervorstehenden Position vorgespannt ist, in der er mit der fest mit dem Rahmen verbundenen Halbklaue (230) ineinandergreift, und in einer Rückzieh-Position ist, in der die Feder (R) zusammengedrückt ist, wenn zum Beispiel die Zähne (231, 232, 233, 234) von jeder der Halbklauen (230, 235) nicht ineinandergefügt sind.

13. System zum Antreiben von Werkzeugen für Landmaschinen gemäß Anspruch 12, **dadurch gekennzeichnet, dass** die durch eine Klauenvorrichtung (23) ausgebildeten Mittel zum automatischen Herstellen einer Antriebsverbindung eine Vorrichtung aufweisen, die die Translation des Teils der Klaue, die durch die Feder (R) vorgespannt wird, auf ihrer Nabe und entlang einer Achse parallel zu der Antriebsachse (236) ermöglicht, wobei die Vorrichtung beim Ausklappen oder Einklappen des Systems ein Trennen und/oder ein Ineinandergreifen der Halbklauen (230, 233) ermöglicht.

14. System zum Antreiben von Werkzeugen für Landmaschinen gemäß einem der vorhergehenden Ansprüche, **dadurch gekennzeichnet, dass** die Vorrichtung zum Übertragen des aus dem Antriebsgehäuse (30) der Landmaschine stammenden Antriebs an eine Antriebsachse (236) aufweist: eine Ausrichtung der in dem oberen oder dem unteren Abschnitt des Zwischenrahmens (7) angeordneten Übertragungswelle (22), die das Antriebsmittel der Werkzeuge bildet, die an dem Ende des schwenkbaren Halbrahmens (1a) angeordnet sind, zu der Achse mindestens eines Getriebes des Kardantyps, das eine durch den Ausgang des Antriebsgehäuses (19) der Landmaschine bereitgestellte Rotationsenergie überträgt, wobei eine leichte Schwingung ermöglicht wird.

15. System zum Antreiben von Werkzeugen für Landmaschinen gemäß Anspruch 14, **dadurch gekennzeichnet, dass** die Antriebsübertragungsvorrichtung aufweist: einen Winkelgetriebemechanismus (19a) zwischen einem ersten Getriebe (20) des Kardan- oder Klauentyps, das von dem Ausgang des Antriebsgehäuses (19) aus in Richtung zu der Seite der Landmaschine ausgerichtet ist, die die Werkzeuge abstützt, und einem zweiten Getriebe (20a) des Kardantyps, das an der Übertragungswelle (22) ausgerichtet ist, die in dem oberen oder dem unteren Abschnitt des Zwischenrahmens (7) angeordnet ist.

16. System zum Antreiben von Werkzeugen für Landmaschinen gemäß einem der Ansprüche 1 bis 13, **dadurch gekennzeichnet, dass** die Übertragungswelle (22), die in dem oberen oder dem unteren Abschnitt des Zwischenrahmens angeordnet ist, über ein Zwischengetriebe mit dem Antriebsgehäuse (19) der Landmaschine verbunden ist, wobei das Zwischengetriebe mindestens ein Getriebe des Kardantyps aufweist, das eine leichte Schwingung mit einem Ritzel (211) ermöglicht, das über eine Kette mit der Übertragungswelle des Zwischenrahmens (7) verbunden ist.

17. System zum Antreiben von Werkzeugen für Landmaschinen gemäß Anspruch 16, **dadurch gekennzeichnet, dass** die Antriebsübertragungsvorrichtung aufweist: einen Winkelgetriebemechanismus zwischen einem ersten Getriebe (20) des Kardan- oder Klauentyps, das zu der Seite der Landmaschine hin ausgerichtet ist, die die Werkzeuge abstützt, und einem zweiten Getriebe (20a) des Kardantyps, das eine leichte Schwingung mit einem Ritzel (211) ermöglicht, das durch eine Kette mit der Übertragungswelle des Zwischenrahmens (7) verbunden ist.

18. System zum Antreiben von Werkzeugen für Landmaschinen gemäß Anspruch 16 oder 17, **dadurch gekennzeichnet, dass** die Position des Ritzels (211), das durch eine kardanische Aufhängung mit dem Versorgungsgehäuse oder mit dem Winkelgetriebegehäuse verbunden ist, in Abhängigkeit von dem Typ der Maschine definiert ist, an den sich die Einrichtung gerade anpasst.

19. System zum Antreiben von Werkzeugen für Landmaschinen gemäß einem der Ansprüche 16 bis 18, **dadurch gekennzeichnet, dass** das Ritzel (211) annähernd auf halber Höhe des Rahmens angeordnet sein kann.

20. System zum Antreiben von Werkzeugen für Landmaschinen gemäß einem der Ansprüche 16 bis 18, **dadurch gekennzeichnet, dass** das Ritzel (211) nahe bei dem unteren Rand des Rahmens angeordnet sein kann.

21. System zum Antreiben von Werkzeugen für Landmaschinen gemäß einem der vorhergehenden Ansprüche, **dadurch gekennzeichnet, dass** das Ende von mindestens einem der Halbrahmen (1) einen Flansch integriert, der vertikal angeordnet ist, und wobei daran das Ende der Achse einer Förderschnecke drehbar gelagert ist, wobei der Flansch bezüglich des Halbrahmens (1) in einer Ebene im Wesentlichen senkrecht zu der Achse der Förderschnecke bewegbar montiert ist, um das Bewegen von zumindest einem Abschnitt der Förderschnecke bezüglich des Bodens eines Trogs zu ermöglichen, der an dem Umfang zumindest eines Abschnitts der Förderschnecke angeordnet ist.

22. System zum Antreiben von Werkzeugen für Landmaschinen gemäß einem der vorhergehenden Ansprüche, **dadurch gekennzeichnet, dass** Verriegelungsmittel ermöglichen, die beiden Halbrahmen bezüglich einander fixiert zu halten, um eine relativen Auslenkung zwischen den Halbrahmen außerhalb der Nutzungen der Maschine zu verhindern, wenn die Halbrahmen auseinandergeklappt sind.

23. Automatisiertes Verfahren zum Vorbereiten für die Straße einer Landmaschine mit zwei Halbrahmen (1a, 1b), die in Straßenposition übereinander positionierbar sind und in Arbeitsposition nebeneinander ausrichtbar sind, die ein Antriebssystem für Werkzeuge gemäß einem der vorhergehenden Ansprüche integriert, **dadurch gekennzeichnet, dass** es aufweist: einen Schritt des Drehens des schwenkbaren Halbrahmens (1a), um einen Klauenmechanismus (23) von dem komplementären Mechanismus zu lösen, der entweder an einem Zwischenrahmen (7) oder an den Halbrahmen (1a, 1b) montiert ist, und einen Schritt des Bewegens in Translation des Halbrahmens (1b), der bezüglich des Zwischenrahmens (7) in Translation montiert ist, wobei das Getriebe (236), das an dem Zwischenrahmen (7) mit dem Antriebsmittel (22) der Werkzeuge (9, 11) verbunden ist, eingezogen wird, damit die jeweiligen äußeren Antriebsmittel des in Translation bewegten Halbrahmens (1b) und des geschwenkten Halbrahmens (1a) übereinander angeordnet werden.

24. Automatisiertes Verfahren zum Vorbereiten einer Landmaschine mit zwei übereinander positionierbaren Rahmen (1a, 1b) für die Straße gemäß dem vorhergehenden Anspruch, **dadurch gekennzeichnet, dass** das Bewegen durch Schwenken oder durch Translation eines der Halbrahmen zusammen mit dem Bewegen durch Translation oder durch Schwenken des zweiten Halbrahmens erfolgt.

25. Automatisiertes Verfahren zum Vorbereiten einer Landmaschine mit zwei übereinander positionierbaren Rahmen (1a, 1b) für die Straße gemäß Anspruch 23, **dadurch gekennzeichnet, dass** das Trennen der Klaue durch eine erste Translation des sich in Translation bewegenden Halbrahmens (1b) und/oder einer der Halbklauen um eine bestimmte Entfernung erfolgt, um das Entkuppeln der Halbklauen (23) zu ermöglichen und/oder die beiden Halbrahmen zu trennen, gefolgt von dem Rotieren des schwenkenden Halbrahmens (1a) und dem anschließenden Bewegen in Translation in Richtung zu dem Inneren des sich in Translation bewegenden Halbrahmens (1b), um diesen unter dem geschwenkten Halbrahmen (1a) zu positionieren.

26. Verfahren zum Vorbereiten für die Straße gemäß einem der vorhergehenden Ansprüche, **dadurch gekennzeichnet, dass** das Verfahren im Vorfeld aufweist:
- einen Schritt des Verriegelns des Zwischenrahmens auf dem Kupplungsrahmen, und/ oder
- einen Schritt des Entriegelns der Halbrahmen aufeinander, und/oder
- einen Schritt des Entriegelns der Halbrahmen auf dem Zwischenrahmen.

27. Verfahren zum Vorbereiten für die Straße, ohne manuelles Eingreifen, einer Landmaschine mit zwei aufeinander gelenkig gelagerten Halbrahmen (1a, 1b), und wobei einer der Rahmen (1b) in Translation an dem Zwischenrahmen (7) montiert ist, der ein Werkzeugantriebssystem gemäß einem der Ansprüche 1 bis 22 integriert, **dadurch gekennzeichnet, dass** das Verfahren aufweist:
- einen ersten Schritt des Bewegens von mindestens einem der Halbrahmen (1a, 1b) von der Symmetrieachse der Maschine aus in Richtung nach außen und/oder von einer der Halbklauen um eine vorbestimmte Entfernung, um das Entkuppeln der Klauen (23) zu ermöglichen,
- einen Schritt des Schwenkens der Rahmen (1a, 1b) aufeinander,
- einen Schritt des Bewegens der beiden Rahmen (1a, 1b) in einer Translationsrichtung, die zu derjenigen des ersten Schrittes entgegengesetzt ist, um die Symmetrieachsen in Übereinstimmung mit der Symmetrieachse der Landmaschine (3) zu bringen.

## Claims

1. System for driving tools for agricultural machines comprising a first half-frame (1b) supporting tools, moving by translation between a working position in alignment with a second half-frame (1a) provided with tools (9, 11) pivoting between the working position and a transport position in which the second half-frame (1a) is positioned above the first half-frame (1b), the tools (9, 11) mounted in each frame being driven by at least one means (25) disposed at the outer end of at least one of the half-frames (1) when these are in their working position, the first half-frame (1b) being mounted for translation on a device with an oscillating frame, comprising a hitching frame (5) secured to the agricultural machine and an intermediate frame (7) allowing angular movements in relation to the frame (5) secured to the machine in a longitudinal axis of rotation and parallel to the axis of symmetry of the machine, the driving system being **characterised in that** it comprises:
- a device for transmission of the drive from the driving unit (19) of the agricultural machine to a driving shaft (236) for the driving means (25) for the tools disposed at the end of the pivoting half-frame (1a), when the half-frame (1a) is moved into position pivoting from its retracted position to its extended working position, the transmission device including at least one transmission shaft (22) mounted on the upper or lower part of the intermediate frame (7),
- a shaft (250) for transmission of the drive between a driving means (25) disposed at the outer end of the half-frame (1a) which pivots and the driving means (25) disposed at the outer end of the half-frame (1b) which moves by translation, when the half-frame (1a) is moved into position pivoting from its retracted position to its extended working position, this transmission shaft (250) being either positioned in the upper or lower part of each half-frame (1a, 1b), or positioned in the upper or lower part of the intermediate frame (7) where at least one portion of the transmission shaft coincides with the driving shaft (236) for the driving means (25) for the tools disposed at the end of the pivoting half-frame (1a) and the transmission shaft (22) mounted on the upper or lower part of the intermediate frame (7).

2. System for driving the tools for agricultural machines according to claim 1, **characterised in that** the tools include an upper tool formed by an Archimedean screw (11) and a lower tool formed by a pick-up rotor (9) which rotates in the opposite direction to the direction of rotation of one of the screws, the screw of one half-frame having a screw pitch which is reversed in relation to the screw of the adjacent half-frame or a reversed direction of rotation.

3. System for driving the tools for agricultural machines according to one of claims 1 or 2, **characterised in that** the tools (9, 11) mounted in each frame are driven by at least one means (25) disposed at the outer end of each of the half-frames (1).

4. System for driving the tools for agricultural machines according to one of claims 1 or 2, **characterised in that** the tools (9, 11) mounted in each frame are driven by at least one means (25) disposed at the outer end of the half-frame (1a) which pivots, the tools of the half-frame (1a) which pivots meshing by means of a dog clutch with the tools of the half-frame (1b) which moves by translation.

5. System for driving the tools for agricultural machines according to one of claims 1 to 4, **characterised in that** the half-frame (1a) which pivots is mounted so as to articulate on the intermediate frame (7).

6. System for driving the tools for agricultural machines according to one of claims 1 to 4, **characterised in that** the half-frame (1a) which pivots is mounted so as to articulate on the half-frame (1b) which moves by translation, the latter being mounted for translation on the intermediate frame (7).

7. System for driving the tools for agricultural machines according to claim 6, **characterised in that** the half-frame (1a) which pivots is articulated with the intermediate frame through the intermediary of a rod or a shaft (24) such that at least one particular movement, by translation or pivoting, of one of the half-frames concomitantly leads to the movement, by pivoting or by translation, of the second half-frame.

8. System for driving the tools for agricultural machines according to one of claims 1 to 4, **characterised in that** the half-frame (1a) which pivots is mounted so as to articulate on the intermediate frame (7) independently of the half-frame (1b) which moves by translation, the half-frame (1b) which moves by translation being mounted for translation on the intermediate frame (7).

9. System for driving the tools for agricultural machines according to claim 8, **characterised in that** the half-frame (1a) which pivots is articulated with the half-frame which moves by translation through the intermediary of a rod or a shaft (24) such that at least one particular movement, by translation or pivoting, of one of the half-frames concomitantly leads to the movement, by pivoting or by translation, of the second half-frame.

10. System for driving the tools for agricultural machines according to one of the preceding claims, **characterised in that** the system comprises at least one actuator triggering the operation of at least one first jack which ensures the movement of at least one half-frame (1b) when the half-frame which moves by translation is moved by translation towards the interior and/or the exterior and/or the half-frame (1a) which pivots is pivoted, and **in that** at least one travel limit device is mounted on one of the moving half-frames (1) of the system such that the arrival of a half-frame (1) moved by the first jack at its travel limit actuates a mechanism which stops the operation of the first jack which controls the movement of the half-frame (1) and/or triggers the movement of one of the half-frames (1) by a second jack.

11. System for driving the tools for agricultural machines according to one of the preceding claims, **characterised in that** the half-frames (1a, 1b) have a U-shaped section and support the two tools mounted so as to pivot in the limbs of the U between the limbs of the U.

12. System for driving the tools for agricultural machines according to one of the preceding claims, **characterised in that** the means for automatically establishing a driving connection are constituted by a device with a dog clutch (23) of which one element (235) is secured to the transmission shaft (22) positioned in the upper or lower part of the intermediate frame (7) and the other complementary element (230) is mounted so as to be rotatable in a housing supporting the driving means for the tools, this part of the dog clutch mounted on a driving shaft (236) being continually subject to the action of a spring (R) in its increasingly projecting position in which it meshes with the half of the dog clutch (230) secured to the frame and in a retracted position, in which the spring (R) is compressed when for example the teeth (231, 232, 233, 234) of each of the halves of the dog clutch (230, 235) are not engaged.

13. System for driving the tools for agricultural machines according to claim 12, **characterised in that** the means for automatically establishing a driving connection constituted by a device with a dog clutch (23) include a device allowing the movement by translation of the part of the dog clutch subject to the action of the spring (R) on its hub and in an axis parallel to the driving shaft (236), the device allowing the halves of the dog clutch (230, 233) to move apart and/or mesh when the system is deployed or retracted.

14. System for driving the tools for agricultural machines according to one of the preceding claims, **characterised in that** the device for transmission of the drive from the driving unit (30) of the agricultural machine to a driving shaft (236) includes alignment of the transmission shaft (22) situated in the upper or lower part of the intermediate frame (7), which forms the driving means for the tools disposed at the end of the half-frame (1a) which pivots, with the axis of at least one transmission of cardan joint type which, allowing a slight oscillation, transmits rotational energy supplied by the output of the driving unit (19) of the agricultural machine.

15. System for driving the tools for agricultural machines according to claim 14, **characterised in that** the device for transmission of the drive includes a bevel gear mechanism (19 bis) between a first transmission (20) of cardan joint type or dog clutch type oriented from the output of the driving unit (19) towards the face of the agricultural machine which supports the tools and a second transmission (20 bis) of cardan joint type aligned on the transmission shaft (22) situated in the upper or lower part of the intermediate frame (7).

16. System for driving the tools for agricultural machines according to one of claims 1 to 13, **characterised in that** the transmission shaft (22) situated in the upper or lower part of the intermediate frame is connected by a return to the driving unit (19) of the agricultural machine, the return comprising at least one transmission of cardan joint type allowing a slight oscillation with a pinion (211) connected by a chain to the transmission shaft of the intermediate frame (7).

17. System for driving the tools for agricultural machines according to claim 16, **characterised in that** the device for transmission of the drive includes a bevel gear mechanism between a first transmission (20) of cardan joint type or dog clutch type oriented towards the face of the agricultural machine which supports the tools and a second transmission (20 bis) of cardan joint type which allows a slight oscillation with a pinion (211) connected by a chain to the transmission shaft of the intermediate frame (7).

18. System for driving the tools for agricultural machines according to claim 16 or 17, **characterised in that** the position of the pinion (211) connected by a cardan joint to the driving unit or to the bevel gear box is defined as a function of the type of machine on which the equipment is being fitted.

19. System for driving the tools for agricultural machines according to one of claims 16 to 18, **characterised in that** the pinion (211) can be situated approximately half way up the frame.

20. System for driving the tools for agricultural machines according to one of claims 16 to 18, **characterised in that** the opinion (211) can be situated close to the lower edge of the frame.

21. System for driving the tools for agricultural machines according to one of the preceding claims, **characterised in that** the end of at least one of the half-frames (1) incorporates a flange which is disposed vertically and on which the end of the shaft of an Archimedean screw is mounted so as to be able to rotate, the flange being mounted so as to be mobile in relation to the half-frame (1) in a plane substantially perpendicular to the shaft of the Archimedean screw to allow the movement of at least one portion of the Archimedean screw in relation to the bottom of the trough disposed on the circumference of at least one part of the Archimedean screw.

22. System for driving the tools for agricultural machines according to one of the preceding claims, **characterised in that** locking means make it possible to keep the two half-frames fixed one in relation to the other to avoid any relative movement between the half-frames other than in applications of the machine when the half-frames are extended.

23. Automated method for preparing for the road an agricultural machine with two half-frames (1a, 1b) which can be positioned one above the other in the road position and aligned one next to the other in the working position incorporating a system for driving the tools according to one of the preceding claims, **characterised in that** it comprises a step for rotation of the half-frame (1a) which pivots to release a dog clutch mechanism (23) of the complementary mechanism mounted either on an intermediate frame (7) or on the half-frames (1a, 1b), and a step for translation of the half-frame (1b) which is mounted for translation in relation to the intermediate frame (7), the transmission (236) connected on the intermediate frame (7) to the driving means (22) for the tools (9, 11) retracting so that the respective outer driving means of the half-frame (1b) which moves by translation and the half-frame (1a) which pivots are positioned one over the other.

24. Automated method for preparing for the road an agricultural machine with two half-frames (1a, 1b) which can be positioned one above the other according to the preceding claim, **characterised in that** the movement, by pivoting or translation, of one of the half-frames is produced concomitantly with the movement, by translation or by pivoting, of the second half-frame.

25. Automated method for preparing for the road an agricultural machine with two half-frames (1a, 1b) which can be positioned one above the other according to claim 23, **characterised in that** the dog clutch is released by a first translation of the half-frame (1b) which moves by translation and/or of one of the halves of the dog clutch by a certain distance to allow the uncoupling of the halves of the dog clutch (23) and/or separation of the two half-frames, followed by the rotation of the half-frame (1a) which pivots then the translation towards the interior of the half-frame (1b) which moves by translation to position it under the pivoted half-frame (1a).

26. Method for preparing for the road according to one of the preceding claims, **characterised in that** the method comprises firstly:
- a step for locking of the intermediate frame on the hitching frame, and/or
- a step for unblocking of the half-frames one on the other, and/or
- a step for unlocking of the half-frames on the intermediate frame.

27. Method for preparing for the road without manual intervention of an agricultural machine with two half-frames (1a, 1b) articulated one on the other and of which one of the half-frames (1b) is mounted for translation on the intermediate frame (7) incorporating a system for driving the tools according to one of claims 1 to 22, **characterised in that** the method includes:
- a first step for movement of at least one of the half-frames (1a, 1b) from the axis of symmetry of the machine towards the outside and/or of one of the halves of the dog clutch a certain distance to allow the uncoupling of the dog clutch (23);
- a step for pivoting of the half-frames (1a, 1b) one on the other;
- a step for movement of the two half-frames (1a, 1b) in a translation direction opposite that of the first step to bring the axes of symmetry into harmony with the axis of symmetry of the agricultural machine (3).
